# NEUE EUROPÄISCHE PATENTSCHRIFT

(11) **EP 0 988 924 B2**
(45) Veröffentlichungstag und Bekanntmachung des Hinweises auf die Entscheidung über den Einspruch: **05.09.2012**
(45) Hinweis auf die Patenterteilung: 24.01.2007
(21) Anmeldenummer: 99118530.7
(22) Anmeldetag: 20.09.1999
(51) Int. Cl.: B23Q 7/04, B23Q 7/14, B27B 31/00, B23Q 3/00

(54) **Holzbearbeitungsanlage**
Wood-working machine
Machine pour travailler le bois

(30) Priorität: 25.09.1998 DE 19843864; 22.02.1999 DE 19907585
(43) Veröffentlichungstag der Anmeldung: 29.03.2000
(73) Patentinhaber: Hundegger, Hans, D-87749 Hawangen (DE)
(72) Erfinder: Hundegger, Hans, D-87749 Hawangen (DE)
(74) Vertreter: Rapp, Bertram

(56) Entgegenhaltungen:
- EP-A1- 0 366 200
- EP-A1- 0 562 216
- EP-A2- 0 319 032
- DE-C1- 3 601 075
- DE-C1- 3 838 422
- DE-U1- 8 914 110
- FR-A1- 2 689 807
- US-A- 4 524 656

## Beschreibung

Die Erfindung betrifft eine Bearbeitungsanlage mit einem längsbeweglichen Kopplungselement, welches das Werkstück zu einem oder mehreren Bearbeitungsaggregaten führt.

Eine solche Bearbeitungsanlage ist aus der US 4 524 656 A bekannt. Es handelt sich dabei um eine Anlage zum Schneiden von langen Metallstäben in Stücke vorbestimmter Länge zur Verwendung in der Bauindustrie. Sie weist zwei Greifer auf, die zu beiden Seiten der Schere angeordnet sind. Die beiden Greifer kooperieren bei der Positionierung eines zu schneidenden Stabes in Bezug auf die Schere, indem sie den Stab einander abwechselnd ergreifen und vorwärts schieben, wobei während der Vorwärtsbewegung eines Greifers mit dem Stab der jeweils andere Greifer entlang des Stabes entgegen dessen Bewegungsrichtung zurückfährt. Wenn der den Stab schiebende Greifer das Ende seines Bewegungsbereiches erreicht hat, gibt er den Stab frei und der andere, inzwischen zurückgefahrene Greifer übernimmt ihn am Anfang seines Bewegungsbereiches. Hierdurch ergibt sich ein schneller Transport des Stabes in die Schnittposition. Die Schere ist in Bezug auf die Transportrichtung des Stabes stationär angeordnet. Da der Stab durch die Schere stets ganz durchtrennt wird, muss nur eine ausreichend genaue Positionierung in Längsrichtung vor der Ausführung des Schnitts gewährleistet sein. Weitergehende Anforderungen an eine genaue Führung des Stabes bestehen nicht.

Bearbeitungsanlagen der eingangs genannten Art werden insbesondere auch für das Bearbeiten länglicher Werkstücke aus Holz wie Balken, Bretter, Rundhölzer oder dergleichen eingesetzt, wobei das Werkstück auf einer Auflage aufliegt und ein längsbewegliches Kopplungselement das Werkstück zu einem oder mehreren Bearbeitungsaggregaten führt.

Eine Holzbearbeitungsanlage, insbesondere eine Abbundanlage, ist aus der DE 34 20 080 C2 bekannt. Aufgabe einer solchen Abbundanlage ist es, aufgrund eines Werkplanes, der zum Beispiel durch ein CAD-Programm entworfen worden ist, die Holzstücke entsprechend vorzubereiten, wie sie zum Beispiel zum Erstellen eines Dachstuhles benötigt werden. Die Holzbearbeitungsanlagen bzw. Abbundanlagen arbeiten hierbei vollautomatisch, das bedeutet, dass ein aufwendiges Anreissen der Holzstücke nicht mehr notwendig ist.

Zum Fördern der Werkstücke ist es hierbei bekannt, zum Beispiel eine kraft- oder formschlüssige Verbindung, zum Beispiel durch einen von oben gegen das Werkstück geführten Stempel zu bewirken. Das Werkstück liegt zum Beispiel auf einem Tisch oder einer Rollenbahn auf. Der als Kopplungselement dienende Stempel bewegt sich hierbei auf einer Schienenbahn, wodurch die Bewegung des Werkstückes durch die Abbundanlage bewirkt wird. Das Werkstück wird hierbei von einem längsverlaufenden Anschlaglineal geführt.

Eine Holzbearbeitungsanlage für das Bearbeiten länglicher, Werkstücke, bei der ein längsbewegliches Kopplungselement das Werkstück zu einem oder mehreren Bearbeitungsaggregaten führt, ist zum Beispiel aus der europäischen Patentanmeldung EP 0 608 746 A1 bekannt. Hierbei werden längliche Werkstücke auf mindestens zwei Spannwagen fest aufgespannt, die auf einer unterhalb des Werkstückes angeordneten Führungsbahn beweglich sind und das Werkstück durch ein feststehendes portalartiges Bearbeitungszentrum bewegen.

Ein weiteres Beispiel für eine Holzbearbeitungsanlage dieser Art bietet die EP 0 607 913 A1. Diese Schrift lehrt ebenfalls einen Werkstücktransport mit mehreren Spannwagen, auf die das Werkstück fest aufgespannt wird. Den Spannwagen sind jeweils eigene Antriebsmotoren zugeordnet, mittels derer sie vor dem Auflegen des Werkstücks frei verfahren werden können. Während der Bearbeitung sind die Spannwagen über einen Zahnriemen fest miteinander verbunden und werden über diesen durch einen einzigen Motor angetrieben.

Bei den beschriebenen Holzbearbeitungsanlagen besteht das Problem, dass das Werkstück im Bereich der Bearbeitungsaggregate, dies sind zum Beispiel Sägen, Bohrer, Fräser, Hobel oder dergleichen, ausreichend geführt werden muss, um eine vernünftige Bearbeitungsgenauigkeit zu erreichen. Hierzu ist es bekannt, dass das Werkstück im Bereich des Bearbeitungsaggregates von feststehenden Anschlägen geführt bzw. gehalten wird. Die Bearbeitungsaggregate sind hierbei in aller Regel Mehrachsmaschinen, die einen beachtlichen Bearbeitungsradius aufweisen können, und die Anschläge müssen natürlich ausserhalb dieses Bearbeitungsradiusses angeordnet werden, um 100%ig sicherzustellen, dass die Anschläge von den Bearbeitungswerkzeugen nicht erreicht werden und beschädigt werden bzw. die Bearbeitungswerkzeuge durch die aus Metall gefertigten Anschläge beschädigt werden. Im Bereich der Bearbeitungswerkzeuge befinden sich auch feststehende Spannmittel, um die verhältnismässig langen Werkstücke einigermassen genau im Bereich der Bearbeitungsaggregate zu führen. Die feststehenden Spannmittel müssen aber ebenfalls ausserhalb des Bearbeitungsbereichs der Bearbeitungsaggregate bleiben, um eine Beschädigung zu vermeiden.

Hieraus resultiert ein verhältnismässig grosser Abstand zwischen dem Punkt der Führung des Werkstückes und der eigentlichen Bearbeitung, was insbesondere bei gebogenen Werkstücken zu Masstoleranzen führen kann, mit dem Risiko, dass Ausschuss entsteht. Auch ist zu beachten, dass das über den Fixierpunkt überstehende Werkstück bei der Bearbeitung zu Schwingungen neigt und daher eine genaue Bearbeitung unsicher sein kann.

Die Erfindung hat sich daher die Aufgabe gestellt, eine Bearbeitungsanlage der vorausgehend beschriebenen Art dahingehend zu verbessern, dass diese eine höhere Genauigkeit, auch bei gebogenen Werkstücken aus Holz, liefert und insbesondere den Ausschuss reduziert.

Gelöst wird diese Aufgabe durch eine Bearbeitungsanlage mit einem längsbeweglichen Kopplungselement, welches das Werkstück zu einem oder mehreren Bearbeitungsaggregaten führt, wobei es sich um eine Holzbearbeitungsanlage für das Bearbeiten länglicher Werkstücke wie Hölzer, Balken, Stämme, Bretter, Rundhölzer oder dergleichen handelt, bei der ein Führungselement vorgesehen ist, welches ebenfalls längsbewegbar ist und an einem Bearbeitungsaggregat im Hinblick auf dessen zu erwartenden Bearbeitungsbereich derart positionierbar ist, dass während der Bearbeitung des Werkstücks durch das Bearbeitungsaggregat eine optimale Werkstückführung erreicht wird, indem das Führungselement möglichst nah an dem Bearbeitungsaggregat positioniert wird, wobei jedoch das Kopplungselement bzw. das Führungselement ausserhalb des Wirkbereiches des Bearbeitungsaggregates bleibt.

Das Führungselement ist als zweites Element neben dem Kopplungselement vorgesehen. Bei Bedarf wird das Werkstück durch die beiden Elemente gleichzeitig bewegt, wobei das Führungselement hierbei als Kopplungselement fungiert. Durch die Verwendung dieser beiden Elemente ist es aber auch möglich, eine Relativbewegung des Werkstückes gegenüber dem Führungselement auszuführen, wodurch das Führungselement beliebig nah an dem Bearbeitungsaggregat positioniert wird und so eine optimale Führung des Werkstückes ermöglicht. Das Führungselement kann hierbei gleich ausgebildet sein wie das Kopplungselement.

Durch die erfindungsgemässe Gestaltung wird erreicht, dass das Führungselement immer optimal bezüglich des Bearbeitungsaggregates und der an dem Bearbeitungsaggregat durchgeführten Bearbeitung positioniert wird. Es ist nämlich zu beachten, dass das Bearbeitungsaggregat nicht bei jeder Bearbeitung den maximalen Bearbeitungsraum benötigt. Die Steuerung aber, die ja das Bearbeitungsaggregat entsprechend der zu bearbeitenden Schritte steuert, kann gleichzeitig die Position des Führungselementes in Abhängigkeit der Bearbeitungsposition des Werkzeuges bestimmen und so eine optimale Anpassung erreichen. Es ist sogar möglich, eine dynamische Anpassung zu realisieren, das heisst das Führungselement wird in einen potentionellen Gefahrenbereich zunächst positioniert, kommt aber dann das Bearbeitungswerkzeug in diesen Bereich, wird das Führungselement vorher zurückgezogen.

Die Bewegung der beiden Elemente, des Führungselementes und des Kopplungselementes, sind hierbei aufeinander abstimmbar, derart, dass zum Beispiel das Führungslement, welches sich in Förderrichtung zum Beispiel vor dem Kopplungselement befindet, möglichst nahe an das Bearbeitungsaggregat herangeführt wird und dann das Werkstück relativ zu diesem Führungslement bewegt wird, wobei das Kopplungselement die Förderung übernimmt. Hierbei klemmt das Führungselement das Werkstück nicht fest, sondern ermöglicht eine gleitende Führung, wobei das Führungselement zum Beispiel wie ein Mundstück wirkt und eine sichere Positionierung bzw. Anlagefläche schafft. Der Vorteil besteht hierbei darin, dass dieser Anschlag an jeder beliebigen Stelle auf der Holzbearbeitungsanlage besteht, ohne hierzu aufwendige Einstellarbeiten wie bei der Montage des Anschlagslineals vorzusehen, gleichzeitig ist es möglich, den Anschlag, welcher sich im Führungselement befindet, von Bedarf zu Bedarf wieder zu positionieren und somit optimal den Gegebenheiten anzupassen.

In einer vorteilhaften Ausgestaltung der Erfindung ist vorgesehen, dass als Kopplungselement ein mit mindestens einer beweglichen Spannbacke ausgestatteter Spannwagen dient und das Kopplungselement das Werkstück mit seinen Spannbacken klemmt. Bei dieser Ausgestaltung der Erfindung liegt das Holzwerkstück auf einem Tisch oder einer Rollenbahn auf. Das Kopplungselement ergreift das Werkstück von zwei Seiten, wobei ein Spannbacken, zum Beispiel der nicht bewegliche Spannbacken, als Null-Linie dient und somit den Anschlag ersetzt. Dadurch ist die Dimension der Breite genau festgelegt und es ist möglich, das aufwendige längsverlaufende Anschlaglineal einzusparen. Dabei ist es möglich, das Kopplungselement so nahe am Werkstück zu positionieren, dass eine optimale Führung bzw. ein Festspannen des Werkstückes im Bereich des Bearbeitungsaggregates möglich ist, ohne dabei zu riskieren, dass das Kopplungselement im Bereich des Bearbeitungsaggregates ist.

Des weiteren wird durch die erfindungsgemässe Lösung erreicht, dass das zu transportierende Holz schonend ergriffen wird. Bei den bekannten Ausgestaltungen wird eine Spitze oder eine Schneide in das Holz gedrückt, was zu sichtbaren Beschädigungen führen kann. Bei der erfindungsgemäßen Ausführung wird das Holz schonend behandelt, es werden keine sichtbaren Eindrücke erzeugt.

Der erfindungsgemässe Vorschlag gestattet es, mit einem Kopplungselement wie beschrieben Werkstücke zu positionieren. Es ist dadurch auch möglich, verhältnismässig kurze Werkstücke mit gleicher Genauigkeit zu positionieren wie verhältnismässig lange Werkstücke. Mit einer solchen Anordnung ist es möglich, Werkstücke bis zu 6 Metern oder grösseren Längen zu bearbeiten, gleichzeitig ist es aber auch möglich, Werkstücke mit weniger als 80 Zentimeter zu bearbeiten. Hieraus resultiert eine enorme Variabilität der Holzbearbeitungsanlage.

Durch die erfindungsgemässen Massnahmen wurde eine hochwertige und sehr universell einsetzbare Holzbearbeitungsanlage geschaffen. Die Holzbearbeitungsanlage ist nicht nur in der Lage, als Abbundanlage wie eingangs beschrieben verwendet zu werden, also im wesentlichen Zimmermannsarbeiten durchzuführen, die Holzbearbeitungsanlage ist auch gleichzeitig als Holzbearbeitungszentrum zu verstehen, auf welchem komplexe Bearbeitungen durchgeführt werden können. Zum Beispiel ist es möglich, mit den vorbeschriebenen Holzbearbeitungsanlagen Elemente für den Treppenbau, Geländerbau, Holzkästen, aber auch beispielsweise Spielsachen usw. zu produzieren. Die erfindungsgemässe Holzbearbeitungsanlage ist daher in der Lage, sowohl zimmermannsmässige Bearbeitungen als auch schreiner- und tischlerartige Bearbeitungen durchzuführen. Es resultiert eine sehr hohe Flexibilität dieser Holzbearbeitungsanlage, die insbesondere für einen kostengünstigen Betrieb der Anlage dient.

In einer Variante der Erfindung wird vorgesehen, daß das Werkstück auf einer Auflage aufliegt. Ähnlich wie im bekannten Stand der Technik befindet sich das werkstück hierbei auf einem Tisch oder einer Rollenbahn. Um einen möglichst leichtgängigen Transport zu ermöglichen, sind die Rollen leichtgängig gelagert bzw. der Auflagetisch mit einer Gleitfläche aus Kunststoff, Teflon, Polyamid, PVC oder dergleichen ausgestattet. Es ist aber auch möglich, daß die erfindungsgemäße Lösung auch realisiert wird, wenn das Werkstück in dem Kopplungs- bzw. Führungselement aufliegt. In einem solchen Fall wird sich die Führungsbahn des Kopplungs- bzw. Führungselementes zum Beispiel unterhalb dieser Elemente befinden und das Werkstück schlittenartig, von unten unterstützt, transportieren. Auch in einer solchen Ausgestaltung ist es möglich, zum Beispiel das hintere Element als Kopplungselement und somit als fest mit dem Werkstück gekoppelten Element auszubilden, wogegen das vordere Führungselement nur die Aufgabe einer Führung bzw. eines Anschlages und Auflage für das Werkstück während der Bearbeitung übernimmt.

In einer Variante der Erfindung ist vorgesehen, daß das Kopplungselement eine gegen das Werkstück anstellbare Schneide, Spitze, ein Stempel, eine Gummi-, Zahn-, Dorn- oder Dornenplatte ist, was eine kraft- oder formschlüssige Verbindung des Werkstückes herstellt. Als Kopplungs- und Führungslemente werden demnach auch unterschiedlich ausgestaltete Elemente vorgesehen, wobei bei dem Führungselement eine führende, gleitende Funktion im Vordergrund steht, beim Kopplungselement aber eine kraftübertragende, transportierende Funktion. Als Kopplungselement sind hierbei verschiedene Mittel bekannt, die erfindungsgemäß kombinierbar sind. Zum Beispiel ist diese Ausgestaltung auch als Nachrüstsatz für bestehende Anlagen, insbesondere Abbundanlagen, von Interesse. Das Kopplungselement wirkt hierbei vertikal oder schräg von oben gegen das Werkstück. Es ist auch möglich, daß das Kopplungselement seitlich am Werkstück ansetzt.

Erfindungsgemäß wird auch eine Lösung eingesetzt, bei der das Kopplungselement und das Führungselement im wesentlichen identisch aufgebaut sind und als ein mit mindestens einer beweglichen Spannbacke ausgestatteter Spannwagen aufgebaut sind. Dabei weist das Kopplungselement Mittel zum Klemmen des Werkstückes an den Spannbacken auf.

Das Führungselement weist hierbei zum Beispiel einen Spannwagen, der längs verschiebbar angeordnet ist, auf, welcher mindestens einen beweglichen Spannbacken besitzt. Das Führungselement ergreift das Werkstück seitlich oder von oben und führt das Werkstück anschlagartig.

Des weiteren ist vorgeschlagen, daß an dem Spannwagen ein Antrieb für eine Relativbewegung des Spannwagens zum Werkstück vorgesehen ist. Bei einer solchen Ausgestaltung ist es möglich, das Werkstück gleichzeitig zu führen und zu fördern, das bedeutet, einen Anschlag zu bilden und gleichzeitig das Werkstück gegen das Bearbeitungswerkzeug zu fördern. Als Antrieb für die Relativbewegung des Werkstückes ist zum Beispiel ein endlos umlaufendes Band bzw. eine Kette an einem oder beiden der Spannbacken vorgesehen. Um die Kopplung zwischen dem Relativantrieb und dem Werkstück zu verbessern, sind zum Beispiel Spitzen oder kleine Schneiden auf den Walzenelementen oder den umlaufenden Bändern bzw. Ketten vorgesehen.

In einer weiteren Ausgestaltung der Erfindung ist vorgesehen, daß an dem Spannwagen ein oder mehrere Bearbeitungswerkzeuge vorgesehen ist/sind. Neben den Bearbeitungsaggregaten werden somit auch an dem Spannwagen Bearbeitungswerkzeuge vorgesehen, die eine zusätzliche Bearbeitungsmöglichkeit eröffnen. Zum Beispiel ist es möglich, einen Bohrer oder Fräser entlang der drei oder fünf Achsen beweglich an dem Spannwagen anzuordnen und so eine weitere Variabilität bei der Verarbeitung der Werkstücke zu erreichen.

Es wird auch vorgesehen, daß an dem Spannwagen eine Umkant-bzw. Schwenkvorrichtung für das Werkstück vorgesehen ist. Oftmals ist das Werkstück nicht nur an seiner aufliegenden Seite, sondern einer Mehrzahl von Auflegeseiten zu bearbeiten, wodurch es notwendig wird, das Werkstück um seine Längsachse rotierend umzukanten. Dieser Vorgang wird durch eine entsprechende Umkantvorrichtung, die am Spannwagen angeordnet ist, erbracht. Gleichzeitig ist es möglich, eine Schwenkvorrichtung an dem Spannwagen anzuordnen, in der man beliebige Winkelbeträge einzustellen vermag und gegebenenfalls auch als Umkantvorrichtung dient. Dadurch ermöglicht die Erfindung auch eine komplexe Bearbeitung, zum Beispiel an der Mantelfläche des Werkstückes, wenn zum Beispiel das Werkstück während des Verschwenkens oder in einer verschwenkten Stellung von einem Bearbeitungsaggregat bearbeitet wird. Die daraus resultierende Variabilität der Bearbeitungsmöglichkeiten ist enorm. Um nur das Umkanten zu realisieren, ist erfindungsgemäß auch vorgeschlagen, an der Holzbearbeitungsanlage eine Umkantvorrichtung vorzusehen. Diese Umkantvorrichtung kantet das Werkstück um seine Längsachse um, während das Spann- bzw. Kopplungselement das Werkstück freigibt. Ein Zentrier- bzw. Anschlagschieber bringt dann das umgelegte Werkstück wieder in den Eingriffbereich des Kopplungs- bzw. Führungselementes, welches das Werkstück dann wieder ergreift und transportiert.

Es wird vorgeschlagen, das Führungselement wahlweise auch als Kopplungselement für den Transport des Werkstückes durch die Holzbearbeitungsanlage einzusetzen. Durch eine solche Ausgestaltung wird das Förderelement noch effektiver und effizienter, da entweder eine sichere Führung auch von langen Werkstücken durch zwei Kopplungs-/Führungselemente erreicht wird oder aber zwei getrennt arbeitende Führungs-/Kopplungselemente zwei unterschiedliche Werkstücke fördern oder bewegen. Durch eine entsprechende NC- bzw. CNC-Steuerung, die unter anderem diese Elemente einzeln ansteuern kann, ist ein beliebiger Einsatz vorstellbar. Auch die Kombination mit einem dritten Führungselement, welches wahlweise als Führungs- oder Kopplungselement dient, im Zusammenwirken mit zwei weiteren Führungs-/Kopplungselementen, ergibt eine hohe Flexibilität der Anlage, da die Bearbeitungsabläufe beliebig optimierbar sind.

In einer bevorzugten Ausgestaltung der Erfindung ist vorgesehen, daß die Holzbearbeitungsanlage ein drittes oder weitere Kopplungs- bzw. Führungselemente aufweist. Durch eine entsprechende größere Anzahl von Kopplungs- und Führungselementen ist es möglich, gleichzeitig mehrere Werkstücke in der Holzbearbeitungsanlage zu bewegen, zu führen und zu bearbeiten. Dadurch wird die Flexibilität und Effizienz der Anlage deutlich gesteigert.

In einer erfindungsgemäßen Weiterentwicklung ist vorgesehen, daß einem Bearbeitungswerkzeug zumindest zeitweise ein Führungselement fest zugeordnet ist und gleichzeitig zwei oder mehrere Werkstücke bearbeitet werden und für jedes Werkstück mindestens ein Kopplungselement vorgesehen ist. Das Führungselement ist zum Beispiel an der Kreissäge zumindest zeitweise fest zugeordnet, das bedeutet, es dient als Führungselement für diese Kreissäge und führt dort die eingangs beschriebenen optimalen Führungsaufgaben des Werkstückes aus. Es ist nicht fest angeordnet, das heißt unbeweglich, sondern vermag natürlich bei Kollisionsgefahr zurückzuweichen. Ist nun zum Beispiel ein Balken an beiden Enden zu bearbeiten, so kann dies bei der hier vorgestellten erfindungsgemäßen Weiterentwicklung dadurch erfolgen, daß das Führungselement zunächst das vordere Ende führt, das erste Kopplungselement hernach das Werkstück durch die Kreissäge bzw. das Bearbeitungsaggregat hindurchfördert und ein zweites Kopplungselement das Werkstück rückseitig ergreift und dann das gleiche Führungselement, jetzt aber relativ auf der andere Seite des Bearbeitungswerkzeuges positioniert, die Führungsaufgabe an dem rückseitige Ende übernimmt. Das freigewordene Kopplungselement dient dabei dazu, ein neues Werkstück herbeizufördern. Hieraus entsteht eine beliebige Kombinierbarkeit der Bearbeitungsschritte und insbesondere eine höhere Effizienz, da gleichzeitig mehrere Werkstücke in der Anlage bearbeitbar sind.

In einer weiteren Ausgestaltung der Erfindung ist vorgesehen, daß der Spannbacken auf der dem Werkstück zugewandten Innenseite eine Gleitplatte, insbesondere aus Kunststoff, aufweist. Durch eine solche Ausgestaltung wird, insbesondere dann, wenn die Spannbacke an einem Führungselement vorgesehen ist, beim Führen des Werkstückes gegen das Bearbeitungsaggregat, wobei das Führungselement hierbei zum Beispiel stillstehend ist, keine zu großen Reibungskräfte entstehen. Ein ähnlicher Effekt kann zum Beispiel auch durch dreh- bzw. bremsbare Körper erreicht werden, die in der Spannbacke gelagert sind. Diese Körper ergeben ebenfalls einen leichtgängigen Lauf des Werkstückes und sind bremsbar, wenn das Führungselement zum Beispiel in ein Kopplungselement umgebildet werden soll. Durch die Wahl der Leichtgängigkeit des Körpers ist daher die Funktionalität des Körpers zwischen einem Gleitkörper (zum Beispiel bei dem Führungselement) und einem Klemmkörper (zum Beispeil bei einem Kopplungselement) einstellbar. Um den entsprechenden Effekt zu verstärken, ist vorgesehen, daß auch ein balliger, rotierender Körper mit Spitzen, Nadeln, Gummibeschichtung oder dergleichen an seinem Umfang ausgestattet ist, um gegebenenfalls die Reibung bzw. den Kraft- und Formschluß zu erhöhen.

Durch die Verwendung der Körper, die zum Beispiel ballig, als Zylinder, als Kegelstumpf oder Doppelkegelstumpf ausbildbar sind, ist der Spannbacken zum Beispiel auch an unterschiedlichste Querschnitte von Werkstücken anpassbar. Insbesondere der Einsatz von Kegelstümpfen bzw. Doppelkegelstümpfen oder die Verwendung eines balligen Körpers erlaubt es, zum Beispiel Rundhölzer zu bearbeiten.

Neben der Verwendung einer Gleitplatte ist es aber auch möglich, daß an mindestens einer Spannbacke auf der dem Werkstück zugewandten Innenseite ein beweglicher oder feststehender Gleitkörper vorgesehen ist. In diesem Zusammenhang wird als Gleitkörper zum Beispiel auch eine Gleitplatte oder eine leichtgängige Rolle verstanden. Die Gleitplatte wird insbesondere dann eingesetzt, wenn der Spannwagen die Funktionalität eines Führungselementes aufweisen soll. Ein feststehender Gleitkörper kann zum Beispiel einstückig mit der Spannbacke ausgebildet sein, das heißt mit ihm fest verbunden, zum Beispiel aufgeklebt oder verschweißt, sein. Es ist auch möglich, die Spannbacke mit dem Gleitkörper aus einem Stück, zum Beispiel aus Kunststoff, zu fertigen. Ein beweglicher Gleitkörper wird zum Beispiel dann eingesetzt, wenn dieser Gleitkörper bezüglich einer anderen Fläche des Spannbackens gegenüber dem Werkstück oder anderen Elementen anstellbar und zurückziehbar ist. Dadurch ist es einfach möglich, wie noch geschildert wird, einen Spannwagen mit beiden Funktionalitäten eines Kopplungs- bzw. Führungselementes auszustatten.

In einer bevorzugten Ausgestaltung der Erfindung ist vorgesehen, daß mindestens eine Spannbacke einen beweglichen oder feststehenden Klemmkörper, insbesondere einen Klemmstempel, eine Dorn-, Dornen-, Riffel-, Zahn-, Nadel-, Schneid- oder Gummiplatte, aufweist, der eine kraft- und/oder formschlüssige Verbindung mit dem Werkstück ermöglicht. Ähnlich wie bei der Ausgestaltung des Gleitkörpers ist es möglich, den Klemmkörper mit der Spannbacke einstückig auszubilden. Es ist aber auch möglich, den Klemmkörper im Sinne der Erfindung an der Spannbacke austauschbar auszugestalten. Bei einem beweglichen Klemmkörper besteht die Option, den Klemmkörper zum Beispiel bezüglich eines Gleitkörpers in Bezug auf das Werkstück vor- oder zurückzubewegen, um entweder den Klemmkörper oder den Gleitkörper in Berührung bzw. Eingriff mit dem Werkstück zu bringen und somit an dem mit einem solchen Spannbacken ausgestatteten Spannwagen zwischen der Funktionalität eines Führungselementes und Kopplungselementes umzuschalten. Die Bewegung kann durch entsprechende Pneumatik-, Hydraulik- oder Arbeitszylinder bzw. durch elektrische Stellantriebe erfolgen.

In einer weiteren Ausgestaltung der Erfindung ist vorgesehen, daß die Spannbacken kraft- und/oder formschlüssig mit dem Werkstück verbunden sind. Ein kraftschlüssiger Verbund wird zum Beispiel durch ein Klemmen der Spannbacken gegen das Werkstück erreicht. Ein Formschluß kann zum Beispiel durch Verwenden von Spitzen oder Schneiden an den Spannflächen erreicht werden.

Hierbei ist zu beachten, daß ein kraftschlüssiger Verbund, zum Beispiel eine Gummiplatte, eine Platte oder ein Klemmstempel mit einem Material, das einen hohen Reibungskoeffizenten aufweist, das zu bearbeitende Werkstück nicht verletzt.

Für die Ausgestaltung der Spannwagen ist vorgesehen, daß mindestens ein Spannbacken durch ein Kraftmittel, insbesondere einem Pneumatikzylinder, gegen das Werkstück bewegbar ist, ihn festklemmt oder einen Anschlag bildet. Neben der Verwendung eines Pneumatikzylinders als Kraftmittel ist es natürlich auch möglich, einen elektrischen Stellmotor oder einen Hydraulikzylinder oder ähnliche Mittel (zum Beispiel einen elektrischen Antrieb) als Kraftmittel zu verwenden.

Hierbei ist es günstig, wenn der feststehende Spannbacken als beweglicher Anschlag eine Null-Linie definiert. Der feststehende Spannbacken definiert bezüglich seiner Längsbewegung entlang der Schienenbahn einen beweglichen Anschlag, der in Y-Richtung (Förderrichtung entspricht der X-Richtung) eine Null-Linie definiert. Alternativ zu diesem Vorschlag ist es aber möglich, beide Spannbacken beweglich und gegen das Werkstück anstellbar auszubilden, wodurch zum Beispiel eine Zentrierung möglich ist. Die Bestimmung der Null-Linie ist dabei etwas aufwendig, da die Stellung der Spannbacken zueinander abzufragen ist, wofür ein zusätzlicher Sensor einzusetzen ist. Hierbei ist vorgesehen, daß die Spannbacken den Gegenstand zum Beispiel zentriert ergreifen, die beiden Spannbacken also gleichförmig, zum Beispiel über ein entsprechendes Gestänge oder Getriebe miteinander gekoppelt, angetrieben werden. Durch eine solche Ausgestaltung ist es möglich, die Spannbewegung ebenfalls mit nur einem Arbeitszylinder bzw. Kraftmittel zu bewirken.

Durch eine solche Ausgestaltung wird erreicht, daß die Mittelebene zwischen den beiden Spannbacken eine Null-Linie definiert und die Anordnung der Koordinaten bezüglich der Null-Linie zum Beispiel positive und negative Werte aufweisen kann. Insbesondere die Zentrierung bei im wesentlich symmetrischen Arbeiten wird hierdurch erleichtert.

In einer Variante der Erfindung ist vorgesehen, daß die Kraft, die von dem Spannbacken auf das Werkstück eingeprägt wird, beim Ergreifen und Transportieren des Werkstückes größer ist als die Kraft, die eingeprägt wird, wenn das Führungselement das Werkstück im Bereich eines Bearbeitungsaggregates führt. Durch eine solche Ausgestaltung ist es möglich, durch ein Element sowohl ein Kopplungselement als auch ein Führungselement aufgrund der Kraft, die von dem Kraftmittel erzeugt wird, zu wählen. Im Falle, daß das Führungselement das Werkstück führt, dienen die Innenflächen der Spannbacken nur als Anschläge und prägen keine oder nur eine geringe Kraft auf das Werkstück ein. Dies ist notwendig, damit eine vernünftige Relativbewegung zwischen dem Führungselement und dem Werkstück möglich ist. Unterstützt wird dies durch eine entsprechende Ausgestaltung des Spannwagens bzw. der Spannbacke, bei der die vorbeschriebenen beiden Funktionalitäten, die Funktionalität des Kopplungselementes und die Funktionalität des Führungselementes, durch eine entsprechende Anordnung und Beweglichkeit von Klemm- und Gleitkörpern vorgesehen ist.

In einer weiteren Ausgestaltung der Erfindung ist vorgesehen, daß auf dem Spannwagen, also sowohl dem Kopplungselement als auch dem Führungselement, ein Niederhalterelement für das Werkstück vorgesehen ist. Durch das Niederhalterelement, welches zum Beispiel an den Spannbacken oder zwischen den Spannbacken längs verschieblich, zentriert angeordnet ist und vertikal gegen das Werkstück anstellbar ist, wird erreicht, daß das Werkstück immer möglichst gleichförmig an das Bearbeitungsaggregat herangeführt wird. Das Niederhalterelement wird insbesondere dann von Bedeutung, wenn krumme oder schiefe Werkstücke zu bearbeiten sind, die zum Beispiel im Bereich, in dem der Niederhalter einsetzen soll, nach oben hochstehen und so eine Maßungenauigkeit erzeugen würden. Neben der Verwendung von Niederhalterrollen ist es auch möglich, daß eine Niederhalterplatte vorgesehen ist, die von oben gegen das Werkstück anstellbar ist und so das Werkstück nach unten drückt. In einer bevorzugten Ausgestaltung der Erfindung ist auch vorgesehen, daß an dem Kopplungselement bzw. dem Führungselement ein Führungsmund für das Werkstück vorgesehen ist. Der Führungsmund ist hierbei in seiner Querschnittsfläche der Querschnittsfläche des Werkstücks anpaßbar. Zwei Seiten dieses Führungsmundes werden hierbei von dem Spannbacken gebildet, der Führungsmund ist hierbei im wesentlichen flächig ausgebildet und drückt auf der verbleibenden dritten Seite auf das Werkstück. In diesem Fall zählt auch die Auflagefläche, als vierte Fläche, zum Mund und bildet eine mund- oder kastenartige Führung für das Werkstück. Um eine leichtgängige Anordnung zu schaffen, ist insbesondere die Verwendung von Niederhalterrollen günstig, da die Rollen leicht auf dem Werkstück abrollen und so die Vorwärtsbewegung des Kopplungselementes nicht behindern. Alternativ hierzu ist es auch möglich, auf dem Niederhalter eine entsprechende Gleitbeschichtung, zum Beispiel eine Teflon- oder Kunststoffschicht, vorzusehen.

Durch die Verwendung von kombinierten Führungs-/Kopplungselementen ist es auch leicht möglich, die Querschnittsbreite bzw. die Querschnittsfläche der zu bearbeitenden Werkstücke deutlich zu erhöhen, da diese Maße im wesentlichen nur von der Ausgestaltung des Führungselementes abhängen.

Für die Ausgestaltung der Führungsbahn, welche das Fürhrungselement bzw. das Kopplungselement aufnimmt, ist vorgesehen, daß diese zum Beispiel als Schienenbahn ausgebildet ist, die ein- oder zweiseitige Führungsrollenbahnen aufweist. In einer Variante der Erfindung ist es auch möglich, daß das Kopplungselement bzw. Führungselement das Werkstück portalartig übergreift oder untergreift und für die Führung der Elemente eine Doppelführungsbahn mit einem gewissen Abstand zueinander vorgesehen ist. Durch eine solche Ausgestaltung wird eine höhere Stabilität erreicht.

In einer bevorzugten Ausgestaltung der Erfindung ist vorgesehen, daß an der Holzbearbeitungsanlage eine oder mehrere Führungsbahnen für eine möglichst unabhängige Bewegung von mehreren Spannwagen vorgesehen ist. Durch eine solche Ausgestaltung wird eine hohe Flexibilität erreicht, da verschiedene Strategien für den Transport der Werkstücke vorgesehen werden können. Es ist zum einen möglich, daß eine Kopplungs- bzw. Führungselementeneinheit ein Werkstück komplett durch die Anlage begleitet, es ist aber auch möglich, daß zu einem gewissen Zeitpunkt die Übergabe erfolgt und dann die Spannwagen getrennt voneinander zu ihren neuen Positionen bewegt werden. Dabei ist es möglich, daß die Führungsbahnen teilweise oder alle über, neben oder unterhalb der Auflagefläche angeordnet sind.

Durch eine solche Ausgestaltung wird eine hohe Variabilität der Anlage erreicht.

Des weiteren schlägt die Erfindung vor, daß die Steuerung der Holzbearbeitungsanlage in Abhängigkeit des Bearbeitungsschrittes verschiedene Strategien für das Transportieren bzw. Führen des Werkstückes vorgibt. Zum Beispiel ist vorgesehen, daß das Werkstück durch zwei Kopplungselemente ergriffen und gefördert wird. Hierbei wurde das "Führungselement" zu einem Kopplungselement umgewidmet, was zum Beispiel durch eine entsprechende Ansteuerung der Kraftmittel zum Klemmen des Werkstückes oder durch einen Einsatz des Klemmkörpers durch eine entsprechende Relativbewegung des Klemmkörpers zum Werkstück, um diesen in Eingriff mit dem Werkstück zu bringen, erreicht wird. Es ist auch möglich, beide vorgenannten Mittel (Ansteuerung der Kraftmittel und Einsatz des Klemmkörpers) gleichzeitig einzusetzen. Durch eine solche Ausgestaltung wird ein zuverlässiger Transport auch langer Werkstücke erreicht.

Ist das Werkstück an ein Bearbeitungsaggregat herantransportiert, so wird vorgesehen, daß das Werkstück durch ein Kopplungselement ergriffen und gefördert wird, während das Führungselement das Werkstück führt bzw. als Anschlag dient. In diesem Fall wird das zweite Kopplungselement wieder zum Führungselement zurückgewidmet, wobei zum Beispiel die Klemmwirkung an diesem Kopplungselement "reduziert" wird.

In gleicher Weise ist es auch möglich, anstelle des Klemmkörpers den Gleitkörper zum Einsatz zu bringen. Durch eine umgekehrte Relativbewegung wie oben beschrieben ist dies zum Beispiel möglich.

Ist die Bearbeitung abgeschlossen, so wird zum Beispiel nur noch ein Kopp-lungselement eingesetzt, um das Werkstück abzutransportieren, das andere Führungselement dient wiederum als Kopplungselement und fördert das nächste Werkstück heran.

Um die Variabilität und insbesondere die Verarbeitungsgeschwindigkeit zu erhöhen, ist auch vorgesehen, daß das bewegte Werkstück von einem ersten Kopplungselement an ein zweites Kopplungselement übergeben wird. Der Unterschied zwischen einem Führungselement und einem Kopplungselement liegt letztendlich in der Kraft, die durch das Haltemittel in die Spannbacken eingeprägt wird und/oder ob ein Klemm- oder Gleitkörper am Werkstück eingesetzt wird. Verwendet die Holzbearbeitungsanlage sowohl ein Führungselement als auch ein Kopplungselement, so sind beide Elemente, zum Beispiel gleichzeitig als erstes und zweites Kopplungselement, einsetzbar. Durch die Übergabe des Werkstückes im Fluss wird eine enorme Geschwindigkeitserhöhung erreicht, da das Werkstück nicht zuerst abgebremst werden muß, die Übergabe eingeleitet werden muß und dann das Werkstück wieder beschleunigt werden muß.

Die Steuerung der Holzbearbeitungsanlage ist dabei so ausgebildet, daß in Abhängigkeit des Bearbeitungsaggregates die Position des Führungselementes an dem Werkstück und die Haltekraft an dem Spannbacken an dem jeweiligen Führungselement eingestellt und überprüft wird. Für eine genaue Positionsbestimmung sind Sensoren bekannt. Die Steuerung, die die entsprechenden Bearbeitungsschritte vorgibt und aus einem Konstruktionsplan entnimmt, weist Routinen auf, die eine optimierte Anordnung der Führungs- bzw. Kopplungspositionen an dem Werkstück ergeben. Aufgrund der vorgegebenen Daten erkennt die Steuerung auch, ob der Spannwagen als Führungs- oder als Kopplungselement einzusetzen ist und stellt eine entsprechende Haltekraft und/oder den Einsatz von Klemm-/Gleitkörpern an den Spannbacken ein.

In diesem Zusammenhang ist es von Vorteil, wenn die Holzbearbeitungsanlage eine Steuerung, insbesondere eine NC- bzw. CNC-Steuerung, aufweist und jedes Kopplungselement bzw. Führungselement einzeln ansteuerbar ist. Die Steuerung wird hierbei zum Beispiel von einem Microprozessor unterstützt und stellt aufgrund der Konstruktionsdaten oder der Werkplanung die jeweiligen Bearbeitungsschritte und Koordinaten zusammen. Um ein hohes Niveau an Variabilität der beiden Spannwagen, die wahlweise als Kopplungs- oder Führungselement einsetzbar sind, zu erreichen, sind erfindungsgemäß diese beiden Elemente unabhängig voneinander ansteuerbar. Es ist dabei auch möglich, daß mehr als zwei Spannwagen eingesetzt werden. An der Führungsbahn bzw. dem Spannwagen sind hierbei Mittel und Sensoren vorgesehen, die eine genaue Positionierung des Spannwagens, bei genauer Identifizierung des Spannwagens, auf der Anlage erlauben. Dadurch ist es möglich, die Position des Spannwagens im System, aber auch die relative Lage des Spannwagens als Kopplungs- oder Führungselement bei dem Transport des Werkstückes, genau zu bestimmen und festzulegen. Dies ist insbesondere dann wichtig, um die Optimierung des Zuschneidens bei einer Minimierung des Verschnittes zu erreichen.

In einer weiteren erfindungsgemäßen Ausgestaltung ist vorgesehen, daß zwei oder mehrere Führungsbahnen für die Spannwagen parallel zueinander vorgesehen sind und auf einer Führungsbahn ein oder mehrere Spannwagen einsetzbar sind. Durch eine solche Ausgestaltung ist es möglich, zum Beispiel in zwei voneinander unabhängigen Führungsbahnen, insgesamt, zum Beispiel zweimal zwei, vier Spannwagen, wahlweise als Kopplungselement bzw. Führungselement, einzusetzen und im kontinuierlichen Fluss mindestens zwei Werkstücke gleichzeitig durch die Holzbearbeitungsanlage zu transportieren und zu bearbeiten. Durch eine solche Ausgestaltung wird die Fexibilität und auch die Bearbeitungsgeschwindigkeit deutlich gesteigert.

In einer erfindungsgemäßen Weiterentwicklung ist vorgesehen, daß das Kopplungselement das Werkstück in kurzem Abstand hinter dem Führungselement ergreift und fördert und gegebenenfalls das Kopplungselement am Werkstück nachfaßt, um dieses weiterzuförern. Es ist gefunden worden, daß insbesondere bei stark gewundenen oder gekrümmten Hölzern oder Werkstücken es nicht günstig ist, wenn der Abstand zwischen Kopplungselement und Führungselement (welches sich in nächster Nähe vom Bearbeitungsaggregat befindet) zu groß ist, da dann der Krümmungsradius zu unerwünschten Maßtoleranzen führt. Es ergibt sich, daß der Anlagepunkt "wandert", das heißt, das in Bearbeitung befindliche Teil des Werkstückes wird nicht parallel zur Förderrichtung bewegt. Die Bearbeitung erfolgt "schief". In einem solchen Fall ist vorgesehen, daß das Kopplungselement möglichst nahe hinter dem Führungselement am Werkstück angeordnet ist und so den zweiten Punkt der Anlage bzw. Führung und Förderung bildet. Durch diesen kurzen Abstand ist eine eventuelle Verkrümmung für die Bearbeitung nicht gravierend bzw. schädigend, wobei trotzdem eine gerade Führung des Werkstückes während der Bearbeitung möglich ist. Der Abstand, der zwischen Kopplungselement und Führungselement bei dieser Ausgestaltung zu wählen ist, richtet sich zum einen zum Beispiel nach dem Maß, mit welchem das Werkstück während der Bearbeitung zu fördern ist. Dadurch ist es möglich, daß ein Nachfassen des Kopplungselementes am Werkstück vermeidbar ist. Im übrigen bemißt sich dieser Abstand nach dem Krümmungsradius und den tolerablen Maßtoleranzen, die aufgrund von solchen Maßungenauigkeiten eventuell noch auftreten. Dieses Maß kann von einigen wenigen Spannbackenlängen bis zu einem Drittel oder der Hälfte des Werkstückes reichen und ist jeweils vom Einzelfall abhängig. Das genaue Maß ist zum Beispiel durch ein entsprechendes Vermessen des Balkens im Eingangsbereich vor der eigentlichen Holzbearbeitung möglich. Durch eine solche Ausgestaltung wird sichergestellt, daß auch grobe, verwundene Hölzer mit hoher Genauigkeit bearbeitet werden.

In einer Variante der Erfindung ist auch vorgesehen, daß nur ein Kopplungselement, zum Beispiel als Spannwagen ausgestattet, ein Werkstück von geringer Länge (1 m und weniger) transportiert und entsprechend positioniert.

Des weiteren ist erfindungsgemäß vorgeschlagen, daß eine vertikale, horizontale oder winklige Spannrichtung der Spannbacke vorgesehen ist. In der in den Ausführungsbeispielen der Zeichnung gezeigten erfindungsgemäßen Holzbearbeitungsanlage wird eine horizontale Spannrichtung der Spannbacken gezeigt. Es ist in gleicher Weise aber auch möglich, die Spannrichtung der Spannbacken vertikal zu orientieren, wobei dann zum Beispiel das Werkstück in der Spannbacke gelagert ist. Es ist auch möglich, die Spannrichtung beliebig winklig auszugestalten, zum Beispiel, um komplexere Bearbeitungen an der Mantelfläche des Werkstückes vorzunehmen. Dies ist insbesondere dann günstig, wenn beispielsweise eine Schwenk- bzw. Umkantvorrichtung an den Spannwagen kombiniert wird.

Weitere vorteilhafte Ausgestaltungen der Erfindung sind anhand der Zeichnungen beschrieben. Hier ist die Erfindung schematisch dargestellt.

Es zeigen:
- Fig. 1: eine dreidimensionale Ansicht einer erfindungsgemäßen Holzbearbeitungsanlage,
- Fig. 2, 3: je einen senkrechten Schnitt durch die erfindungsgemäße Holzbearbeitungsanlage,
- Fig. 4, 5: je in einer Ansicht Details der erfindungsgemäßen Holzbearbeitungsanlage,
- Fig. 6: in einer Draufsicht eine spezielle Ausgestaltung der erfindungsgemäßen Holzbearbeitungsanlage,
- Fig. 7: in einer Draufsicht eine schematische Darstellung einer Spannbacke der erfindungsgemäßen Holzbearbeitungsanlage,
- Fig. 8, 9: in einer Seitenansicht je in zwei verschiedenen Stellungen eine Spannbacke gemäß Fig. 7.

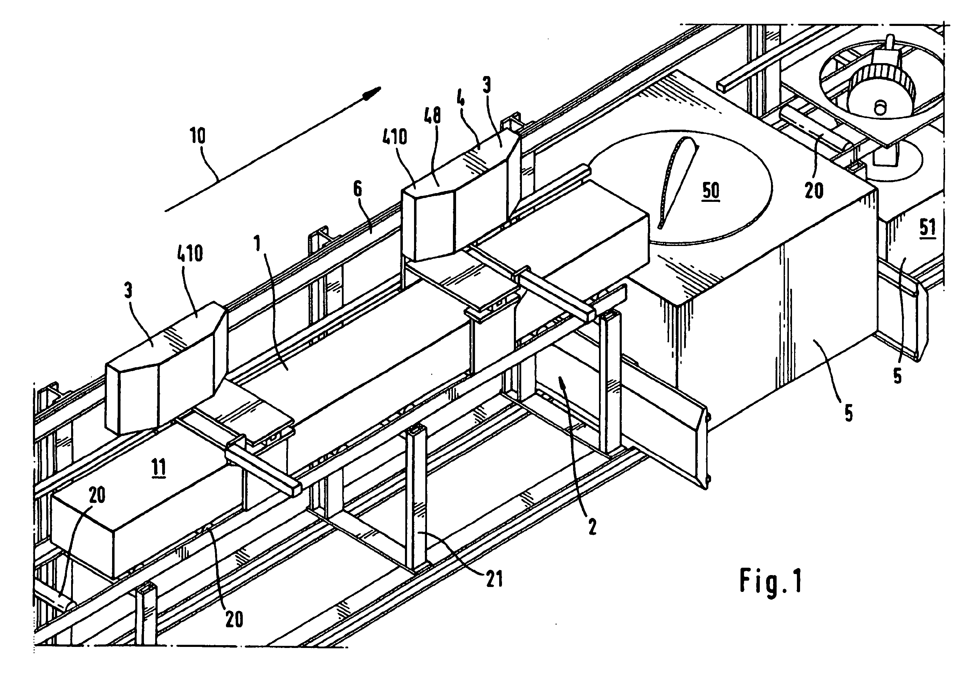

In Fig. 1 ist eine erfindungsgemäße Holzbearbeitungsanlage, hier insbesondere eine Abbundanlage, abgebildet. Die Aufgabe einer Holzbearbeitungsanlage ist es, an dem Werkstück 1, entsprechend den Vorgaben eines Konstruktionsplanes, verschiedene Bearbeitungen durchzuführen. Die vorbeschriebenen Holzbearbeitungsanlagen werden zum Beispiel für das Abbinden der Holzbalken für das Errichten von Dachstühlen eingesetzt. Der Einsatzbereich solcher Holzbearbeitungsmaschinen ist sehr umfassend. Es kann allgemein Bauholz bearbeitet werden, wobei die Vermessung, das Positionieren und die verschiedenen Bearbeitungsschritte vollautomatisch durchgeführt werden.

Für das Bearbeiten des Werkstückes 1 sind mehrere Bearbeitungsaggregate 5 vorgesehen. Mit 50 ist eine Säge gekennzeichnet, die um mindestens drei Achsen beweglich gelagert ist und in der Lage ist, verschiedene Schnitte, auch unter verschiedenen Winkeln, durchzuführen.

In Förderrichtung 10, hinter der Säge 50, ist eine Frässtation 51 vorgesehen. Die Fräsvorrichtung ist um fünf Achsen beweglich gelagert und in der Lage, verschiedene Fräsbearbeitungen durchzuführen. Hierzu ist auch ein Fingerfräser vorgesehen.

Das Werkstück 1 wird entlang einer Schienenbahn 6 durch die Holzbearbeitungsanlage gefördert. Das Werkstück 1 liegt hierbei auf der Auflage 2 auf, die als Rollenbahn 20 ausgebildet ist.

Die Rollen 20 stützen sich hierbei auf einem Gestell 21 ab.

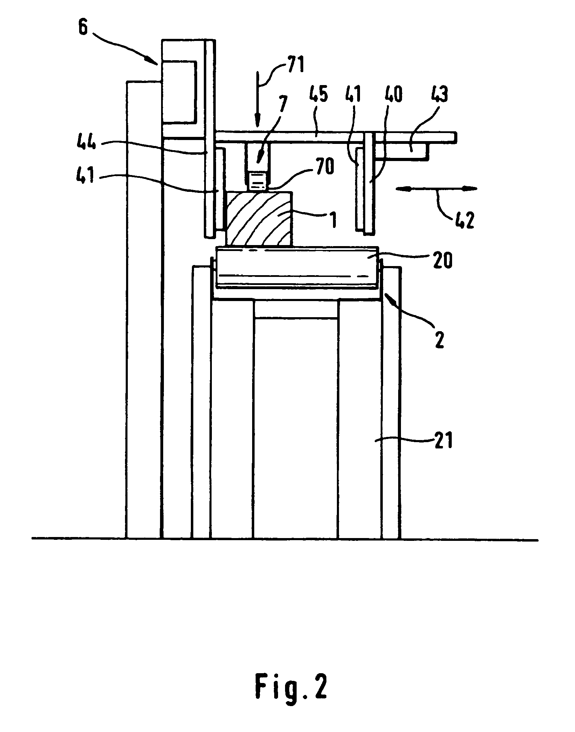

In dem in Fig. 1 bzw. Fig. 2 gezeigten Ausführungsbeispiel der Erfindung ist die Schienenbahn 6 oberhalb der Rollenbahn 20 angeordnet. Die Kopplungselemente 3 bzw. Führungselemente 4 sind auf der Schienenbahn 6 beweglich gelagert. Diese sind zum Beispiel als Spannwagen 410 ausgebildet. Das Kopplungselement 3 bzw. das Führungselement 4, welches auch die Funktion eines Kopplungselementes 3 ausüben kann, dienen dazu, das Werkstück 1, entlang der Schienenbahn 6, in der Hauptförderrichtung 10, zu bewegen. Die Holzbearbeitungsanlage ist hierbei natürlich auch so ausgestattet, daß eine bidirektionale Bewegung des Werkstückes 1 auf der Rollenbahn 20 möglich ist, das heißt eine Bewegung entgegen der Hauptförderrichtung 10. Dies ist zum Beispiel bei dem Zurückpositionieren für die Nachbearbeitung von Vorteil.

Der erfindungsgemäße Gedanke ist aber nicht nur auf die hier gezeigte Ausgestaltung beschränkt, sondern ist in gleicher Weise auch dann einzusetzen, wenn die Schienenbahn 6 unterhalb des Werkstückes 1 angeordnet ist und das Kopplungs- bzw. Führungselement 3, 4 das Werkstück 1 untergreift oder haltend trägt.

Das Kopplungs- bzw. Führungselement 3, 4 ist im wesentlichen identisch aufgebaut. Der Aufbau wird mit Hilfe der Fig. 2 beschrieben. Das Kopplungselement 3 bzw. das Führungselement 4 besteht aus zwei Spannbacken 40, 44, wobei ein Spannbacken im wesentlichen feststehend ausgebildet ist. Dieser feststehende Spannbacken 44 ist hierbei der Spannbacken, der bezüglich des Werkstückes 1 auf der Seite mit der Schienenbahn 6 angeordnet ist. Zwischen den beiden Spannbacken 40, 44 befindet sich das Werkstück 1. Zum Ergreifen und Festhalten des Werkstückes 1 ist der Spannbacken 40 auf dem Träger 45 längsbeweglich angeordnet. Der Träger 45 überragt hierbei das Werkstück 1. In analoger Ausgestaltung kann der Träger 45 aber auch das Werkstück 1 untergreifen.

Der im wesentlichen horizontal orientierte Träger 45 kann dabei vertikal verschiebbar angeordnet sein. Dies ist insbesondere dann von Vorteil, wenn lange Holzstücke ergriffen werden sollen. An dem Träger 45 ist ein Niederhalterelement 7 vorgesehen. Das Niederhalterelement 7 bewirkt, daß das Werkstück 1 sicher auf der Auflage 2 aufliegt. Im Zusammenwirken mit den beiden Spannbacken 40, 44 wird so eine vierseitige bzw. allseitige Fixierung oder ein Spannen des Werkstückes 1, insbesondere im Bereich der Bearbeitungsaggregate 5, erreicht. Das Niederhalterelement 7 wird hierbei zum Beispiel als Rolle 70 ausgebildet, die durch einen eigenen Vertikalantrieb (dargestellt durch den Pfeil 71) gegen das Werkstück 1 geführt werden kann. Durch diese Ausgestaltung ist es möglich, auch unterschiedlich hohe Werkstücke zu bearbeiten. Das Niederhalterelement 7 wird hierbei zum Beispiel durch einen Pneumatikzylinder oder eine Federkraft oder eine ausreichende Gewichtskraft gegen das Werkstück 1 gedrückt. Das Niederhalterelement 7 ist auf dem Träger 45 längs verschiebbar und wird günstigerweise mittig über dem Werkstück 1 angeordnet. Auf dem Träger 45 können auch mehrere Niederhalterelemente 7 angeordnet sein.

Die Bewegung des beweglichen Spannbackens 40 ist mit dem Doppelpfeil 42 gekennzeichnet. Für den Antrieb des beweglichen Spannbackens 40 ist ein Kraftmittel, insbesondere ein Arbeitszylinder 43, vorgesehen, der zum Beispiel pneumatisch beaufschlagbar ist und so eine Bewegung des beweglichen Spannbackens 40 zuläßt. Bei einer doppelt wirkenden Ausgestaltung des Arbeitszylinders 43 ist es möglich, auch die Rückzugsbewegung zum Freigeben des Werkstückes 1 zu realisieren.

Die Bewegung des Spannbackens 40 kann hierbei im wesentlichen rechtwinklig zur Hauptförderrichtung 10 angeordnet sein.

Erfindungsgemäß wird vorgeschlagen, daß die Spannbacken 40, 44 das Werkstück 1 entweder kraftschlüssig oder sogar formschlüssig ergreifen. Bei einem formschlüssigen Ergreifen sind auf den Spannbackeninnenseiten Dorne und sonstige Elemente vorgesehen, die sich in die Holzoberfläche eindrücken und so eine formschlüssige Verbindung ergeben. Bei einer kraftschlüssigen Verbindung ist es möglich, daß das Werkstück 1 bezüglich der Spannbacken 40, 44 bzw. bezüglich des Führungselementes oder Kopplungselementes 3, 4 durch eine entsprechende Vorschubkraft verschiebbar ist. Um diesen Effekt noch zu unterstützen, kann vorgesehen werden, daß auf den Spannbackeninnenseiten, die dem Werkstück 1 zugewandt sind, je eine Gleitplatte 41 aus Kunststoff oder dergleichen vorgesehen ist. Dies ist insbesondere dann von Vorteil, wenn das Führungselement 4 eine Führung des Werkstückes 1 bewirkt, während das Kopplungselement 3 das Werkstück 1 gegen das Bearbeitungsaggregat 50 fördert.

Wie in Fig. 1 dargestellt, ist es möglich, das Führungselement 48, welches in Förderrichtung 10 am vorderen Ende des Werkstückes 1 angeordnet ist, derart am oder im Bearbeitungsaggregat 5 zu positionieren, daß eine optimale Führung des Werkstückes 1 erreicht wird. Günstige Bearbeitungsergebnisse werden dann erreicht, wenn der Abstand zwischen dem Punkt, an dem das Werkstück 1 geführt oder gehalten ist, und dem Bearbeitungspunkt des Bearbeitungsaggregates 50 möglichst gering ist. Umgekehrt wird dies durch den Arbeitsbereich des jeweiligen Bearbeitungsaggregates 5 bestimmt. Da diese Informationen aber der Steuerung vorliegen, die Steuerung bestimmt letztendlich das Werkzeug und den Bearbeitungsschritt, ist die Steuerung problemlos in der Lage, das vordere Führungselement 48, im Hinblick auf den zu erwartenden Bearbeitungsbereich, optimal zu positionieren. Es ist natürlich auch möglich, die Positionierung des Führungselementes 4 während der Bearbeitung zu korrigieren, um schrittweise immer eine optimale Führung zu erreichen.

Es wird dabei vorgesehen, daß das Führungselement 4 das Werkstück 1 entweder klemmend hält oder nur hält bzw. führt, wobei eine Relativbewegung des Werkstückes 1 gegenüber dem Führungselement 4 möglich ist.

In Fig. 1 ist angedeutet, daß das Kopplungselement 3 und das Führungselement 4 im wesentlichen spiegelsymmetrisch zueinander aufgebaut sind. Die Ausgestaltung ist derart gewählt, daß möglichst wenige Maschinenteile des Führungselementes 4 in den Bereich des Bearbeitungsaggregates 5 hineinragen und trotzdem eine optimale Führung des Werkstückes 1 erreicht wird. In dem in Fig. 1 dargestellten Ausführungsbeispiel würde das in Hauptförderrichtung 10 hintenliegende Kopplungselement 3 bei einer Bearbeitung der Rückseite 11 des Werkstückes 1, in Bezug auf die Bearbeitungsaggregate 5, positionierbar sein, wie das vordere Führungselement 4 im Förderbereich. Es wird hierbei auch vorgesehen, daß die Funktionalität vom Kopplungselement 3 und Führungselement 4 bei rückseitigen Bearbeitungen entsprechend umgedreht wird.

Das Kopplungselement 3 bzw. das Führungselement 4 befinden sich auf einer Schienenbahn 6. Das Kopplungselement 3 und Führungselement 4 können hierbei funktional austauschbar sein bzw. funktional gleichwirkend sein. Das Kopplungs- bzw. Führungselement 3, 4 wird hierbei eigens, separat angetrieben und weist jeweils eine eigene Positioniereinheit auf. Der Antrieb kann hierbei zum Beispiel durch einen eigenen Spindelantrieb oder aber einen eigenen Motor mit Ritzel, welcher auch eine Zahnstange greift, ausgebildet sein. Natürlich ist auch ein entsprechender Ketten- oder Keilriemenantrieb möglich. Es können aber auch mehrere Kopplungs-/Führungselemente 3, 4 auf der Schienenbahn 6 angeordnet werden, die eine flexible Bearbeitung der Werkstücke 1 ermöglichen. Die Kopplungs- bzw. Führungselemente 3, 4 werden hierbei von der Steuerung separat angesteuert und entsprechend den geplanten Bearbeitungsschritten unabhängig oder abhängig angesteuert und kontrolliert.

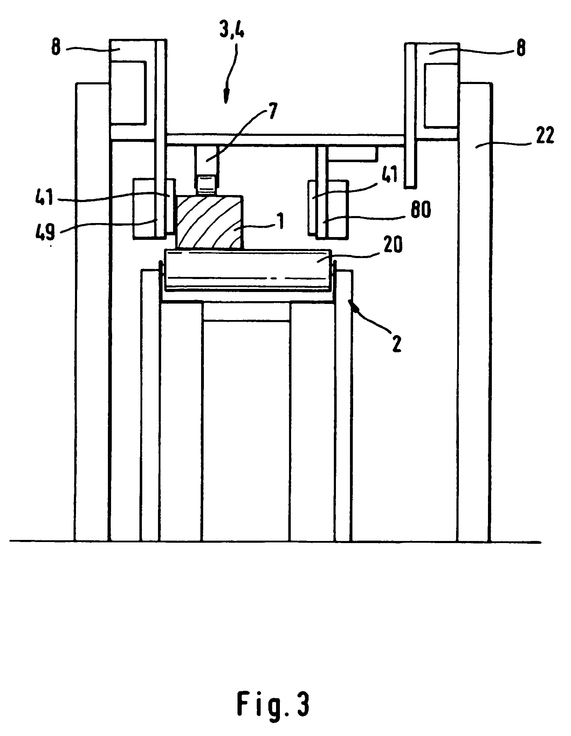

In Fig. 3 ist eine weitere Ausgestaltung der Holzbearbeitungsanlage gezeigt. In diesem Beispiel ist ein portalartiges Führungs- bzw. Kopplungselement 3, 4 vorgesehen, welches von einer Portalführungsbahn 8, die als Doppelführungsbahn 80 ausgebildet ist, geführt ist. Die Portalführungsbahn 8 wird getragen von dem Portalgestell 22. Die Portalführungsbahn 8 bzw. das Portalgestell 22 sind hierbei - links und rechts in Förderrichtung gesehen - von der Auflage 2 angeordnet und erhöhen somit die Stabilität der Anordnung von Führungselement und Kopplungselement. In dem gezeigten Ausführungsbeispiel ist der linke Spannbacken 49, an welchem das Werkstück 1 anliegt, feststehend ausgebildet, wodurch dieser Spannbacken 49 auch gleichzeitig als Anschlag wirkt. Der andere Spannbacken 80 ist hierbei, ähnlich wie in Fig. 2, quer zur Förderrichtung 10 beweglich und gegen das Werkstück 1 anstellbar.

Neben den in Fig. 2 bzw. 3 gezeigten Anordnungen der Führungsbahn 8, 6 ist es auch möglich, die Führungsbahn zum Beispiel unterhalb des Werkstückes 1 anzuordnen oder seitlich unterhalb des Werkstückes 1.

In Fig. 2 ist die Führungsbahn 6 seitlich neben dem Werkstück 1 angeordnet, wobei der Spannwagen, der als Kopplungselement oder Führungselement (3, 4) dient, hierbei einseitig gelagert ist. Die Führungsbahn 6 ist hierzu mit Doppellagerflächen ausgestattet, um eine sichere Lagerung der Spannwagen zu ergeben.

Der Aufbau der Portalführungsbahn 8 ist in gleicher Weise ebenfalls mit Doppellagerflächen ausgestaltbar, um ein hohes Maß an Stabilität und Genauigkeit zu gewährleisten.

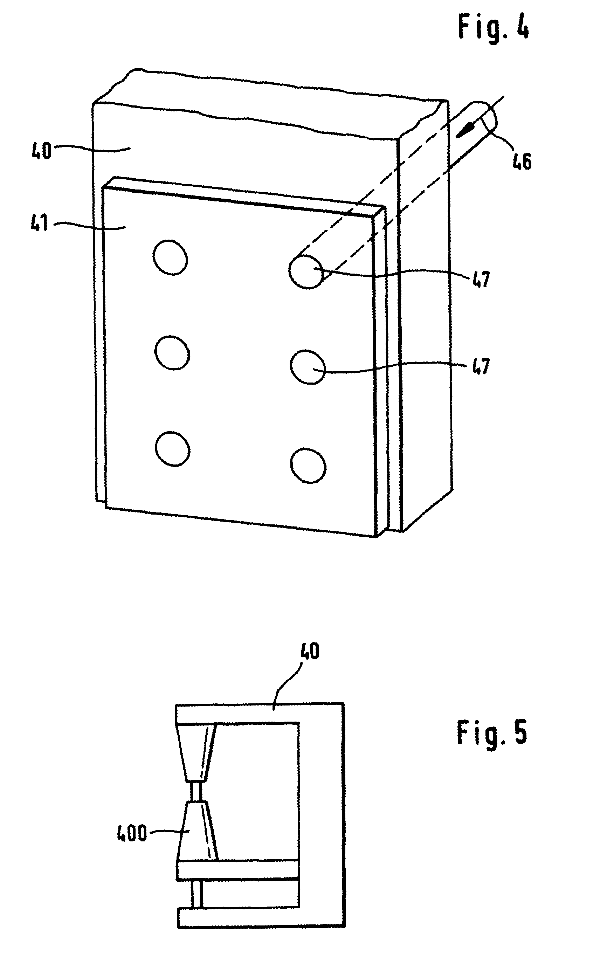

In Fig. 4 ist in einer vergrößerten Darstellung ein Detail der Spannbacke 40 gezeigt. Die Spannbacke 40, die zum Beispiel längsbeweglich oder feststehend ausgebildet ist, besitzt eine Gleitplatte 41. Diese Gleitplatte 41 ist aus Kunststoff, zum Beispiel aus Teflon, Polyamid, Polyäthylen, PVC oder dergleichen, gebildet. Die Gleitplatte ist hierbei so ausgebildet, daß diese einen möglichst geringen Reibungskoeffizient aufweist, um, wenn der Spannbacken als Führungselement eingesetzt wird, einen leichtgängigen Lauf des durch das Führungselement 4 gehaltenen bzw. geführten Werkstückes 1 zu ermöglichen. Wie beschrieben, ist die Funktion des Führungselementes auch in eine Funktion als Kopplungselementes umsteuerbar. Hierzu wird entweder der Druck der Spannbacke 40 insgesamt auf das Werkstück erhöht, zum Beispiel durch eine erhöhte Anstellkraft gegen das Werkstück, oder aber es werden Stempel 47, die in der Spannbacke 40 eingelassen sind, durch ein Kraftmittel 46 gegen das Werkstück 1 gestellt. Günstig ist es hierbei, daß der Kopf des Klemmstempels 47 mit Gummi oder einem anderen Material mit hohem Reibungskoeffizient ausgestattet ist. Es wird vorgeschlagen, die Gleitfläche 41 mit einem Material mit geringem Reibungskoeffizienten auszustatten, um eine möglichst geringe Reibung bei dem Führungselement vorzusehen. Für den Fall aber, daß der Spannwagen als Kopplungselement 3 verwendet wird, kommen die Klemmstempel 47 in Einsatz, wodurch durch eine entsprechende Ausgestaltung der Köpfe eine optimale Kopplung möglich ist. Neben einem entsprechenden Material mit hohem Reibungskoeffizienten ist es aber auch möglich, an dem Kopf des Klemmstempels Spitzen, Nadeln, Schneiden oder sonstige formschlußherstellende Elemente anzuordnen. Die daraus resultierende formschlüssige Verbindung sichert eine zuverlässige Kopplung zwischen dem Kopplungselement und dem Werkstück.

Des weiteren wird vorgesehen, daß der Kopf des Klemmstempels 47 in der passiven Stellung gegenüber der Anlagefläche der Spannbacke 40 zurücksteht. In der passiven Stellung, also in der Stellung, in der die Klemmstempel 40 nicht eingesetzt werden (zum Beispiel wenn der Spannwagen als Führungselement verwendet wird), wird durch diese Stellung sichergestellt, daß der Kopf, welcher zum Beispiel beschichtet oder mit formschlußbildenden Elementen ausgestattet ist, nicht in Kontakt mit dem Werkstück 1 ist. Diese konstruktive Ausgestaltung kann aber auch dazu verwendet werden, den Klemmstempel 47 beim Umschalten des Spannwagens von einem Kopplungselement 3 zu einem Führungselement 4 sicher vom Werkstück 1 abzustreifen. Dabei wirkt dann die Gleitplatte 41, die dann an dem Werkstück 1 anliegt, als Ab-streif- bzw. Widerlager. Dies kann insbesondere dann von Vor-teil sein, wenn auf dem Kopf des Klemmstempels 47 Elemente vorgesehen sind, die einen Formschluß bilden, sich also in dem Werkstück 1 regelrecht verkrallen. Durch diese Ausgestaltung wird eine sichere Lösung des Kopplungselementes von dem Werkstück 1 erreicht.

In Fig. 5 ist eine weitere Ausgestaltung eines Spannbackens 40 gezeigt. In einem hier dargestellten Beispiel ist an der Spannbacke 40 ein drehbarer Körper 400 vorgesehen, der in dem hier gezeigten Ausführungsbeispiel als Doppelkegelstumpf ausgebildet ist. Dieser Doppelkegelstumpf bewirkt, daß auch runde Querschnitte, zum Beispiel komplette Stämme, durch das Kopplungselement bzw. das Führungselement bewegt und geführt und somit in der Holzbearbeitungsanlage auch verarbeitbar sind.

Neben dem Einsatz eines Kegelstumpfes oder Doppelkegelstumpfes, die umgedreht zueinander orientiert sind, ist es aber auch möglich, als Körper 400 einen Zylinder (zum Beispiel eine Rolle) oder dergleichen einzusetzen. Durch eine entsprechende Dimensionierung des Doppelkegelstumpfes ist die Spannbacke auch in den entsprechenden runden Querschnitten problemlos anpassbar. Es ist auch vorgesehen, daß der Abstand zwischen den beiden Kegelstümpfen und bei einem Doppelkegelstumpf veränderbar ist, um sich den verschiedenen Radien der Hölzer anzupassen.

Es ist vorgesehen, den Körper 400 bremsbar auszugestalten, um durch eine Kupplung oder Bremse zwischen der Funktion eines Führungselementes und Kopplungselementes umschalten zu können. Umgekehrt ist es auch möglich, den Körper 400 mit einem Antrieb auszustatten, um bei einem Spannwagen bei Bedarf eine Relativbewegung des Werkstückes gegenüber dem Spannwagen auszuführen.

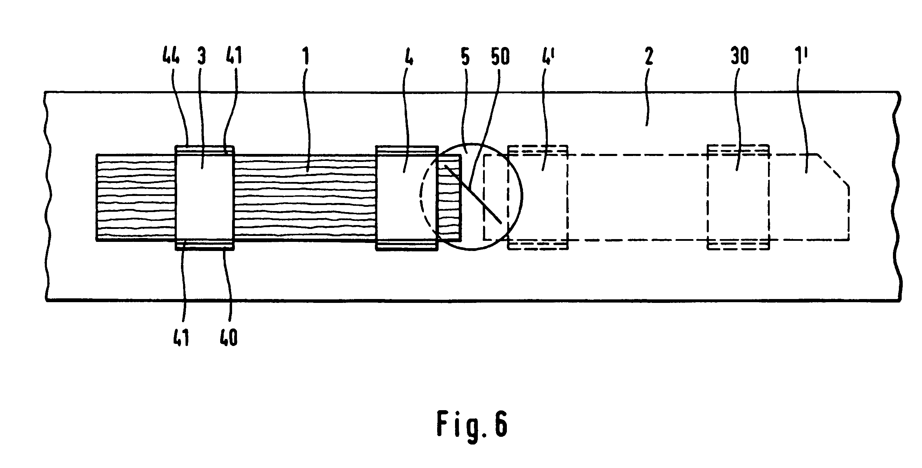

In Fig. 6 ist eine vorteilhalfte Anwendung inbesondere des Führungselementes 4, 4' gezeigt. Von links wird das Werkstück 1 hereintransportiert. In diesem Ausführungsbeispiel befindet sich das Führungselement 4 bevorzugt im wesentlichen die ganze Zeit in unmittelbarer Nähe des Bearbeitungsaggregates 5, welches hier zum Beispiel als Säge 50 ausgebildet ist. Ein erstes Kopplungselement 3 fördert hierbei das Werkstück 1 gegen die Säge 50, um zum Beispiel einen Cut- oder Kehlschnitt einzuarbeiten. Ist die Bearbeitung abgeschlossen, so wird das Werkstück 1 nach rechts in die Position 1' gefördert und an ein zweites Kopplungselement 30 übergeben. Wird nun das rückseitige Ende des Werkstückes 1 bearbeitet, dient wiederum das Führungselement 4', welches vorher das vordere Ende bezüglich des Bearbeitungsaggregates geführt hat. Das erste Kopplungselement 3 ist derweil frei und kann ein neues Werkstück 1 heranfördern. Hierdurch wird eine deutliche Effizienzsteigerung erreicht.

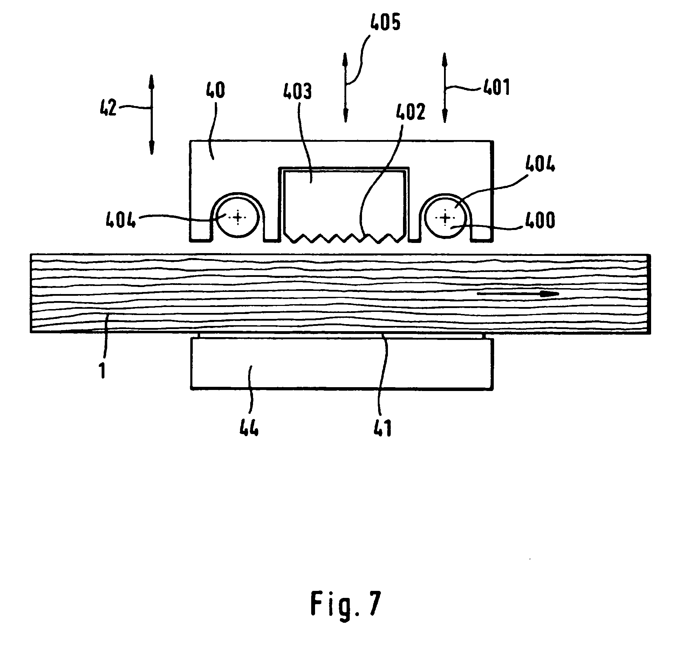

In den Fig. 7, 8 und 9 sind vorteilhafte Ausgestaltungen insbesondere eines Gleit- (404) und Klemmkörpers (403) gezeigt. In Fig. 7 ist eine schematische Übersicht angedeutet. Die gewählten Anordnungen entsprechen nicht dem realistischen Maßtstab. Der dargestellte Spannwagen besteht schematisch aus zwei Spannbacken 40, 44, wobei die feststehende Spannbacke mit 44 gekennzeichnet ist. Diese weist auf ihrer Innenfläche, dem Werkstück 1 zugewandt, eine Gleitplatte 41 auf. Mit Hilfe eines nicht weiter dargestellten Arbeitszylinders ist die bewegliche Backe 40 gegen das Holz anstellbar (siehe Pfeil 42) und auch zurückziehbar.

Eine Änderung der Funktionalität eines so ausgestatteten Spannwagens zwischen Kopplungselement und Führungselement wird bei der hier dargestellten Ausgestaltung durch die Vorsehung eines Klemmkörpers 403 und eines Gleitkörpers 404 realisiert. Als Gleitkörper 404 ist hierbei ein drehbar gelagerter Körper 400 möglich. Als Klemmkörper 403 ist hier zum Beispiel eine mit Zähnen 402 ausgestattete Zahn-, Rieven- oder Schneideplatte vorgesehen. Allgemein weist der Klemmkörper 403 eine Ausgestaltung auf, die einen möglichst hohen Reibungskoeffizienten aufweist, um eine gute kraft- bzw. formschlüssige Verbindung des Spannwagens als Kopplungselement 3 mit dem Werkstück 1 zu ermöglichen. Es sind aus dem Stand der Technik verschiedene Mittel wie Gummiplatte, Dorn- oder Dornenplatte, Nadelplatte, Schraubenplatte usw. bekannt.

Eine Umstellbarkeit zwischen der Funktionalität Kopplungselement 3 und Führungselement 4 wird nun dadurch erreicht, daß entweder der leichtgängige Gleitkörper 404 an das Werkstück 1 angestellt wird (dies ist angedeutet durch den Doppelpfeil 401), wodurch dann die Relativbewegung des Werkstückes 1 gegenüber dem Führungselement 4 möglich ist. Sodann rollt das Werkstück 1 leichtgängig an den Rollen bzw. der Gleitplatte 41 ab. Soll die Funktionalität umgestellt werden auf ein Kopplungselement 3, so wird der Klemmkörper 403 anstelle des Gleitkörpers 404 mit dem Werkstück 1 in Eingriff gebracht. Hierzu ist es möglich, daß zunächst der Gleitkörper 404 im Einwirkbereich mit dem Werkstück 1 gemäß Pfeil 401 zurückgezogen wird und dann der Klemmkörper 403 durch eine entsprechende Betätigung entlang des Doppelpfeils 405 gegen das Werkstück 1 angestellt wird. Neben dieser doppelten Beweglichkeit, also der Beweglichkeit des Klemmkörpers 403 und des Gleitkörpers 404, ist es auch möglich, nur eines dieser beiden Elemente beweglich auszugestalten, um den einen oder anderen Körper in Eingriff mit dem Werkstück 1 zu bringen.

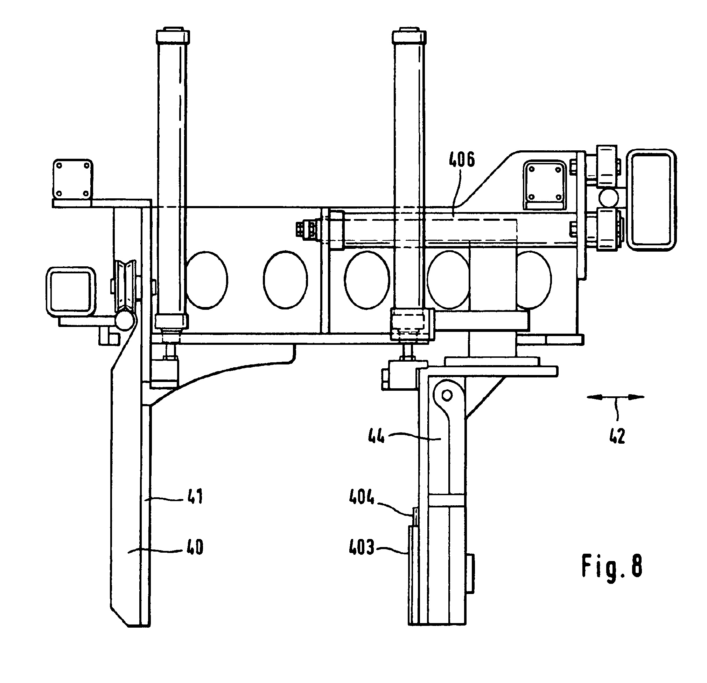

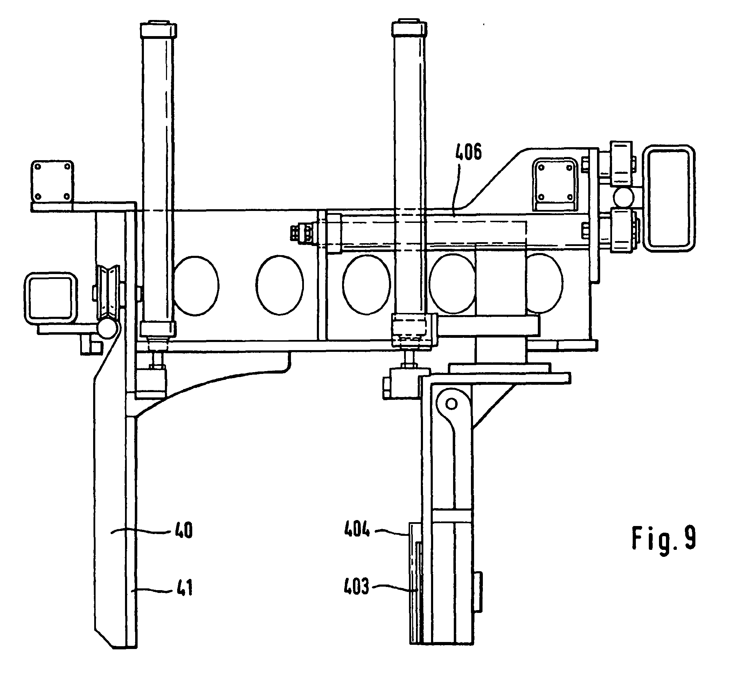

In Fig. 8, 9 sind am schematisch dargestellten Spannwagen diese unterschiedlichen Funktionalitäten Klemmen bzw. Koppeln und Führen dargestellt. In Fig. 8 ist nach innen vorstehend zunächst der Klemmkörper 403 ersichtlich, der Gleitkörper 404 steht etwas zurück. In Fig. 9 ist es gerade andersherum, nämlich der Gleitkörper 404 steht nach innen, dem nicht dargestellten Werkstück 1 zugewandt, gegenüber dem Klemmkörper 403 vor. Bewirkt wird dieses durch einen entsprechend angeordneten Arbeitszylinder (pneumatisch, hydraulisch) oder eine Betätigungsmechanik mit Elektroantrieb.

Für die Spannbewegung, die gegebenenfalls zusätzlich oder auch nur ausschließlich ebenfalls für einen Unterschied zwischen der Funktionalität Kopplungselement 3 und Führungselement 4 eines entsprechenden Spannwagens dient, ist hier ein als Pneumatikzylinder 406 ausgestattes Kraftmittel vorgesehen, welches letztendlich eine Bewegung des beweglichen Spannbackens 40 entlang des Doppelpfeiles 42 ermöglicht.

## Patentansprüche

1. Holzbearbeitungsanlage für das Bearbeiten länglicher Werkstücke wie Hölzer, Balken, Stämme, Bretter, Rundhölzer oder dergleichen, mit einem längsbeweglichen Kopplungselement (3), welches das Werkstück (1) zu einem oder mehreren Bearbeitungsaggregaten fördert, und einem Führungselement (4), welches ebenfalls längsbewegbar ist und derart an einem Bearbeitungsaggregat positionierbar ist, dass einerseits eine optimale Werkstückführung während der Bearbeitung erreicht wird und andererseits das Kopplungselement bzw. das Führungselement außerhalb des Wirkbereiches des Bearbeitungsaggregates bleibt, wobei das Führungselement (4) dergestalt ausgebildet ist, dass es sowohl zur gleitenden Führung des Werkstücks (1) während einer Förderung des Werkstücks (1) durch das Kopplungselement (3), als auch zur Ausübung der Funktion eines Kopplungselements durch Ergreifen und Fördern des Werkstücks (1) geeignet ist, indem als Führungselement (4) ein mit mindestens einer beweglichen Spannbacke (40, 44) ausgestalteter Spannwagen (410) dient, der das Werkstück (1) ergreift bzw. daran anschlagartig anliegt, und eine Spannbacke (40) sowohl einen Gleit-(404) als auch einen Klemmkörper (403) aufweist, die relativ zueinander beweglich, gegen das Werkstück (1) anstellbar sind und, je nach Wahl des gegen das Werkstück (1) angestellten Körpers (403, 404) die Funktionalität eines Kopplungs- oder Führungselements gegeben ist, **dadurch gekennzeichnet, dass** die Spannbacke (40) ballig, als Zylinder, als Kegelstumpf oder als Doppelkegelstumpf ausgebildete drehbare Körper (400) als Gleitkörper (404) trägt.

2. Holzbearbeitungsanlage nach Anspruch 1, **dadurch gekennzeichnet, dass** das Werkstück (1) auf einer Auflage (2), insbesondere einem Tisch mit Gleitfläche oder einer Rollenbahn (20) aufliegt.

3. Holzbearbeitungsanlage nach Anspruch 1 oder 2, **dadurch gekennzeichnet, dass** das Werkstück (1) in dem Kopplungs- bzw. Führungselement (3, 4) aufliegt.

4. Holzbearbeitungsanlage nach einem der vorhergehenden Ansprüche, **dadurch gekennzeichnet, dass** als Kopplungselement (3) ein/e gegen das Werkstück anstellbare Schneide, Spitze, Stempel, Gummi-, Dorn-, Zahn- oder Dornenplatte, welche eine kraft-/formschlüssige Verbindung mit dem Werkstück herstellt, vorgesehen ist.

5. Holzbearbeitungsanlage nach einem der vorhergehenden Ansprüche, **dadurch gekennzeichnet, dass** als Kopplungselement (3) ein mit mindestens einer beweglichen Spannbacke (40) ausgestatteter Spannwagen (410) dient und das Kopplungselement (3) das Werkstück mit seinen Spannbacken (40, 44) klemmt.

6. Holzbearbeitungsanlage nach einem der vorhergehenden Ansprüche, **gekennzeichnet durch** eine dynamische Positionierung des Führungselementes (4) derart, dass das Führungselement (4) in Abhängigkeit der Stellung/ Position des Bearbeitungswerkzeuges das Werkstück (1) möglichst nahe am Bearbeitungswerkzeug positioniert.

7. Holzbearbeitungsanlage nach einem der vorhergehenden Ansprüche, **dadurch gekennzeichnet, dass** das Führungselement (4) das Werkstück (1) an einem Bearbeitungsaggregat (5) festklemmt oder das Werkstück (1) von dem Führungselement (4) anschlagartig geführt wird, wobei sich das Werkstück (1) relativ zum Führungselement (4) bewegt.

8. Holzbearbeitungsanlage nach einem der vorhergehenden Ansprüche, **dadurch gekennzeichnet, dass** die Anlage eine Schienenbahn (6) aufweist, auf welcher das Kopplungselement (3) und das Führungselement (4) schlittenartig verschiebbar, getrennt ansteuerbar beweglich sind, und dass das Werkstück (1) entlang dieser Schienenbahn (6) durch die Bearbeitungsaggregate (5) gefördert wird.

9. Holzbearbeitungsanlage nach einem der vorhergehenden Ansprüche, **dadurch gekennzeichnet, dass** die Holzbearbeitungsanlage ein drittes oder weiteres Kopplungs- und Führungselement (3, 4) aufweist.

10. Holzbearbeitungsanlage nach einem der vorhergehenden Ansprüche, **dadurch gekennzeichnet, dass** einem Bearbeitungswerkzeug (5) zumindest zeitweise ein Führungselement (4, 4') fest zugeordnet ist, und dass gleichzeitig zwei oder mehrere Werkstücke (1) bearbeitet werden und für jedes Werkstück (1) mindestens ein Kopplungselement (3, 30) vorgesehen ist.

11. Holzbearbeitungsanlage nach einem der vorhergehenden Ansprüche, **dadurch gekennzeichnet, dass** das Werkstück (1) im wesentlichen im mittleren Bereich von dem Kopplungselement (3) ergriffen wird, und dass an dem Endbereich das Führungselement (4) angreift, welches hier auch als Kopplungselement (3) fungieren kann.

12. Holzbearbeitungsanlage nach einem der vorhergehenden Ansprüche, **dadurch gekennzeichnet, dass** das Kopplungselement (3) das Werkstück (1) in kurzem Abstand hinter dem Führungselement (4) ergreift und fördert und gegebenenfalls das Kopplungselement (3) am Werkstück nachfasst, um es weiterzufördern.

13. Holzbearbeitungsanlage nach einem der vorhergehenden Ansprüche, **gekennzeichnet durch** eine vertikale, horizontale oder winklige, schräge Spannrichtung der Spannbacke (40, 44).

14. Holzbearbeitungsanlage nach einem der vorhergehenden Ansprüche, **dadurch gekennzeichnet, dass** an dem Spannwagen (410) ein Antrieb für eine Relativbewegung des Werkstückes zum Spannwagen vorgesehen ist.

15. Holzbearbeitungsanlage nach einem der der vorhergehenden Ansprüche, **dadurch gekennzeichnet, dass** an dem Spannwagen (410) ein oder mehrere Bearbeitungswerkzeug/e vorgesehen ist/sind.

16. Holzbearbeitungsanlage nach einem der vorhergehenden Ansprüche, **dadurch gekennzeichnet, dass** an dem Spannwagen (410) beziehungsweise an der Holzbearbeitungsanlage eine Umkant-/bzw. Schwenkvorrichtung für das Werkstück (1) vorgesehen ist.

17. Holzbearbeitungsanlage nach Anspruch 16, **dadurch gekennzeichnet, dass** das Werkstück (1) entweder während des Verschwenkens oder in einer verschwenkten Stellung von einem Bearbeitungsaggregat oder Bearbeitungswerkzeug bearbeitet wird.

18. Holzbearbeitungsanlage nach einem der vorhergehenden Ansprüche, **dadurch gekennzeichnet, dass** mindestens eine Spannbacke (40, 44) auf der dem Werkstück (1) zugewandten Innenseite einen beweglichen oder feststehenden Gleitkörper oder eine Gleitplatte (41), insbesondere aus Kunststoff, aufweist.

19. Holzbearbeitungsanlage nach einem der vorhergehenden Ansprüche, **dadurch gekennzeichnet, dass** der bewegliche oder feststehende Klemmkörper (403), insbesondere einen Klemmstempel, eine Dorn-, Domen-, Riffel-, Zahn-, Nadel-, Schneide- oder Gummiplatte, aufweist, der/die eine kraft- und/oder formschlüssige Verbindung mit dem Werkstück ermöglicht.

20. Holzbearbeitungsanlage nach einem der vorhergehenden Ansprüche, **dadurch gekennzeichnet, dass** mindestens eine Spannbacke (40) durch ein Kraftmittel, insbesondere einem Pneumatikzylinder (43), gegen das Werkstück (1) bewegbar ist, ihn festklemmt oder einen Anschlag bildet.

21. Holzbearbeitungsanlage nach einem der vorhergehenden Ansprüche, **dadurch gekennzeichnet, dass** eine feststehende Spannbacke (44) als längsbeweglicher Anschlag eine Null-Linie definiert.

22. Holzbearbeitungsanlage nach einem der vorhergehenden Ansprüche, **dadurch gekennzeichnet, dass** zwei Spannbacken (40, 44) vorgesehen und beide Spannbacken (40, 44) beweglich sind, insbesondere durch ein Getriebe durch einen gemeinsamen Antrieb antreibbar sind.

23. Holzbearbeitungsanlage nach einem der einem der vorhergehenden Ansprüche, **dadurch gekennzeichnet, dass** zwei Spannbacken vorgesehen sind und die Mittelebene zwischen den beiden Spannbacken durch eine Null-Linie definiert ist.

24. Holzbearbeitungsanlage nach einem der vorhergehenden Ansprüche, **dadurch gekennzeichnet, dass** zwei Spannbacken (40, 44) vorgesehen und beide Spannbacken (40, 44) beweglich und gegen das Werkstück anstellbar sind.

25. Holzbearbeitungsanlage nach einem der vorhergehenden Ansprüche, **dadurch gekennzeichnet, dass** die Kraft, die von der Spannbacke (44) auf das Werkstück (1) eingeprägt wird, beim Ergreifen und Transportieren des Werkstückes (1) grösser ist als die Kraft, die eingeprägt wird, wenn das Führungselement (4) das Werkstück (1) im Bereich eines Bearbeitungsaggregats (5) führt.

26. Holzbearbeitungsanlage nach einem der vorhergehenden Ansprüche, **dadurch gekennzeichnet, dass** an dem Kopplungselement (3) bzw. dem Führungselement (4) ein Niederhalterelement (7), insbesondere eine Niederhalterrolle (70), oder ein Führungsmund für das Werkstück ( 1 ) vorgesehen ist.

27. Holzbearbeitungsanlage nach Anspruch 26, **dadurch gekennzeichnet, dass** das Niederhalterelement (7) in Querrichtung zur Längserstreckung bzw. Förderrichtung des Werkstückes (1) verschiebbar ist.

28. Holzbearbeitungsanlage nach einem der vorhergehenden Ansprüche, **dadurch gekennzeichnet, dass** das Führungselement (4) an einer Führungsbahn oder Schienenbahn (6) geführt ist und von der Führungsbahn (6) gegen das Werkstück (1) bewegbar, insbesondere von oben gegen das Werkstück (1) absenkbar, ist.

29. Holzbearbeitungsanlage nach einem der vorhergehenden Ansprüche, **dadurch gekennzeichnet, dass** das Kopplungselement bzw. Führungselement das Werkstück portalartig über-/untergreift und für die Führung des Kopplungs-/Führungselementes eine Doppelführungsbahn vorgesehen ist.

30. Holzbearbeitungsanlage nach Anspruch 26 oder 27, **dadurch gekennzeichnet, dass** das Niederhalterelement (7) unabhängig von der Bewegung des Kopplungs- bzw. Führungselementes (3,4) gegen das Werkstück (1) bewegbar und anstellbar ist.

31. Holzbearbeitungsanlage nach einem der vorhergehenden Ansprüche, **dadurch gekennzeichnet, dass** jedes Kopplungselement (3) bzw. Führungselement (4) durch die Steuerung, insbesondere eine NC- bzw. CNC-Steuerung, einzeln ansteuerbar ist.

32. Holzbearbeitungsanlage nach Anspruch 31, **dadurch gekennzeichnet, dass** die Steuerung in Abhängigkeit des Bearbeitungsaggregats (5) die Position des Führungselements (4) an dem Werkstück (1) und die Haltekraft an der Spannbacke (44) an dem jeweiligen Führungselement (4) einstellt.

33. Holzbearbeitungsanlage nach einem der Ansprüche 31 oder 32, **dadurch gekennzeichnet, dass** die Steuerung in Abhängigkeit des Bearbeitungsschrittes vorgibt, dass das Werkstück (1) entweder durch zwei Kopplungselemente ergriffen und gefördert wird oder durch ein Kopplungselement ergriffen und gefördert wird, während das Führungselement das Werkstück führt bzw. als Anschlag dient oder durch nur ein Kopplungselement ergriffen wird, während das andere Förderelement als Kopplungselement ein anderes Werkstück fördert.

34. Holzbearbeitungsanlage nach einem der vorhergehenden Ansprüche, **dadurch gekennzeichnet, dass** das bewegte Werkstück (1) von einem ersten Kopplungselement an ein zweites Kopplungselement übergeben wird.

35. Holzbearbeitungsanlage nach einem der vorhergehenden Ansprüche, **dadurch gekennzeichnet, dass** zwei Kopplungs-/Führungselemente (3,4) das Werkstück (1) ergreifen, wobei jedes Führungselement (3,4) das Werkstück (1) in einem Endbereich ergreift oder aber die Steuerung den Bereich zum Ergreifen des Werkstückes (1) vorgibt.

36. Holzbearbeitungsanlage nach einem der vorhergehenden Ansprüche, **dadurch gekennzeichnet, dass** eine oder mehrere Führungsbahnen für die Spannwagen parallel zueinander vorgesehen sind und auf einer oder mehreren Führungsbahnen ein oder mehrere Spannwagen als Kopplungs- oder Führungselement, im wesentlichen unabhängig voneinander, einsetzbar sind.

## Claims

1. Woodworking machine for working elongated workpieces such as pieces of timber, beams, trunks, boards, round timber or the like, with a longitudinally movable coupling element (3) which conveys the workpiece (1) to one or more working units, and a guiding element (4) which is also movable longitudinally and can be positioned at a working unit such that firstly optimum workpiece guidance is obtained during working and secondly the coupling element or the guiding element remains outside the operating area of the working unit, the guiding element (4) being embodied such that it is suitable both for sliding guidance of the workpiece (1) during conveyance of the workpiece (1) by the coupling element (3), and also for performing the function of a coupling element by gripping and conveying the workpiece (1) in that the guiding element (4) takes the form of a clamping carriage (410) which is embodied with at least one movable clamping jaw (40, 44) and grips the workpiece (1) and bears against it in the manner of a stop, and one clamping jaw (40) exhibits both a sliding element (404) and a clamping element (403) which can be moved relative to one another and positioned against the workpiece (1) and, depending on the selection of the element (403, 404) positioned against the workpiece (1), the functionality of a coupling or guiding element is provided, **characterised in that** the clamping jaw (40) carries rotatable elements (400) which are spherical, cylindrical or the shape of a truncated cone or double truncated cone as sliding elements (404).

2. Woodworking machine according to claim 1, **characterised in that** the workpiece (1) lies on a support (2), in particular a table with a sliding surface or a roller conveyor (20).

3. Woodworking machine according to claim 1 or 2, **characterised in that** the workpiece (1) lies in the coupling or guiding element (3, 4).

4. Woodworking machine according to one of the preceding claims, **characterised in that** a knife edge, point, piston, rubber sheet, spike plate, toothed plate or spiked plate which can be positioned against the workpiece and creates a force/form-locking connection with the workpiece is provided as the coupling element (3).

5. Woodworking machine according to one of the preceding claims, **characterised in that** a clamping carriage (410) equipped with at least one movable clamping jaw (40) serves as the coupling element (3) and **in that** the coupling element (3) clamps the workpiece with its clamping jaws (40, 44).

6. Woodworking machine according to one of the preceding claims, **characterised by** dynamic positioning of the guiding element (4) such that the guiding element (4) positions the workpiece (1) as close as possible to the working tool depending on the attitude/position of the working tool.

7. Woodworking machine according to one of the preceding claims, **characterised in that** the guiding element (4) clamps the workpiece (1) securely at a working unit (5) or the workpiece (1) is guided by the guiding element (4) in the manner of a stop, the workpiece (1) moving relative to the guiding element (4).

8. Woodworking machine according to one of the preceding claims, **characterised in that** the machine exhibits a rail track (6) on which the coupling element (3) and the guiding element (4) can move being displaceable in the manner of slides and actuatable separately, and **in that** the workpiece (1) is conveyed along this rail track (6) through the working units (5).

9. Woodworking machine according to one of the preceding claims, **characterised in that** the woodworking machine exhibits a third or further coupling and guiding element (3, 4).

10. Woodworking machine according to one of the preceding claims, **characterised in that** a guiding element (4, 4') is associated with a working tool (5) at least for a time and **in that** two or more workpieces (1) are worked simultaneously and at least one coupling element (3, 30) is provided for each workpiece (1).

11. Woodworking machine according to one of the preceding claims, **characterised in that** the workpiece (1) is gripped by the coupling element (3) essentially in the middle area, and the guiding element (4), which here can also function as a coupling element (3), grips in the end area.

12. Woodworking machine according to one of the preceding claims, **characterised in that** the coupling element (3) grips the workpiece (1) a short distance behind the guiding element (4) and conveys it, and when necessary the coupling element (3) grasps the workpiece again to convey it further.

13. Woodworking machine according to one of the preceding claims, **characterised by** a vertical, horizontal or angled oblique clamping direction of the clamping jaw (40, 44).

14. Woodworking machine according to one of the preceding claims, **characterised in that** a drive for relative movement of the workpiece to the clamping carriage is provided on the clamping carriage (410).

15. Woodworking machine according to one of the preceding claims, **characterised in that** one or more working tools are provided on the clamping carriage (410).

16. Woodworking machine according to one of the preceding claims, **characterised in that** an overturning or swivelling device for the workpiece (1) is provided on the clamping carriage (410) or on the woodworking machine.

17. Woodworking machine according to claim 16, **characterised in that** the workpiece (1) is worked by a working unit or working tool either during the swivelling movement or in a swivelled position.

18. Woodworking machine according to one of the preceding claims, **characterised in that** on the inside facing the workpiece (1) at least one clamping jaw (40, 44) exhibits a movable or stationary sliding element or a sliding sheet (41) in particular of plastic.

19. Woodworking machine according to one of the preceding claims, **characterised in that** the movable or stationary clamping element (403) exhibits in particular a clamping piston, a spike plate, spiked plate, chequered plate, toothed plate, pinned plate, knife edge or rubber sheet, which allows a force and/or form-locking connection with the workpiece.

20. Woodworking machine according to one of the preceding claims, **characterised in that** at least one clamping jaw (40) can be moved against the workpiece (1) by a force means, in particular a pneumatic cylinder (43), clamps it securely or forms a stop.

21. Woodworking machine according to one of the preceding claims, **characterised in that** a stationary clamping jaw (44) as a longitudinally movable stop defines a zero line.

22. Woodworking machine according to one of the preceding claims, **characterised in that** two clamping jaws (40, 44) are provided and both clamping jaws (40, 44) are movable, in particular can be driven by a common drive through a gear unit.

23. Woodworking machine according to one of the preceding claims, **characterised in that** two clamping jaws are provided and the median plane between the two clamping jaws is defined by a zero line.

24. Woodworking machine according to one of the preceding claims, **characterised in that** two clamping jaws (40, 44) are provided and both clamping jaws (40, 44) are movable and can be positioned against the workpiece.

25. Woodworking machine according to one of the preceding claims, **characterised in that** the force which is applied by the clamping jaw (44) on the workpiece (1) while gripping and transporting the workpiece (1) is greater than the force which is applied when the guiding element (4) guides the workpiece (1) in the area of a working unit (5).

26. Woodworking machine according to one of the preceding claims, **characterised in that** a hold-down element (7), in particular a hold-down roller (70), or a guiding mouth is provided for the workpiece (1) on the coupling element (3) or the guiding element (4).

27. Woodworking machine according to claim 26, **characterised in that** the hold-down element (7) can be moved in the transverse direction to the longitudinal extension or direction of conveyance of the workpiece (1).

28. Woodworking machine according to one of the preceding claims, **characterised in that** the guiding element (4) is guided on a guiding track or rail track (6) and can be moved from the guiding track (6) against the workpiece (1), in particular lowered from above against the workpiece (1).

29. Woodworking machine according to one of the preceding claims, **characterised in that** the coupling element or guiding element grips over and/or under the workpiece in the manner of a portal and a double guiding track is provided for the guidance of the coupling/guiding element.

30. Woodworking machine according to claim 26 or 27, **characterised in that** the hold-down element (7) can be moved and positioned against the workpiece (1) independently of the movement of the coupling or guiding element (3, 4).

31. Woodworking machine according to one of the preceding claims, **characterised in that** each coupling element (3) or guiding element (4) can be actuated individually by the control system, in particular an NC or CNC control system.

32. Woodworking machine according to claim 31, **characterised in that** the control system sets the position of the guiding element (4) on the workpiece (1) and the retaining force at the clamping jaw (44) on the respective guiding element (4) depending on the working unit (5).

33. Woodworking machine according to one of claims 31 or 32, **characterised in that** depending on the working step, the control system determines that the workpiece (1) is either gripped and conveyed by two coupling elements or gripped and conveyed by one coupling element, while the guiding element guides the workpiece or serves as a stop, or is gripped by only one coupling element, while the other conveying element as coupling element conveys another workpiece.

34. Woodworking machine according to one of the preceding claims, **characterised in that** the moved workpiece (1) is transferred from a first coupling element to a second coupling element.

35. Woodworking machine according to one of the preceding claims, **characterised in that** two coupling/guiding elements (3, 4) grip the workpiece (1), each guiding element (3, 4) gripping the workpiece (1) in an end area or the control system determining the area in which the workpiece (1) is to be gripped.

36. Woodworking machine according to one of the preceding claims, **characterised in that** one or more guiding tracks for the clamping carriages are provided parallel to one another and one or more clamping carriages can be used on one or more guiding tracks as coupling or guiding element, essentially independently of one another.

## Revendications

1. Machine-outil à bois pour le travail de pièces allongées telles que bois de charpentes, solives, troncs, planches, grumes ou autres, comprenant un élément d'accouplement (3) mobile longitudinalement, qui transporte la pièce (1) en direction d'un ou de plusieurs groupes d'usinage, et un élément de guidage (4), qui est également mobile longitudinalement et positionnable sur un groupe d'usinage de telle sorte qu'un guidage optimal de la pièce est obtenu pendant le travail, d'un côté, et que l'élément d'accouplement ou l'élément de guidage reste à l'extérieur de la zone d'action du groupe d'usinage, de l'autre côté, l'élément de guidage (4) étant configuré de telle sorte qu'il se prête aussi bien au guidage glissant de la pièce (1) pendant un transport de la pièce (1) par l'élément d'accouplement (3), qu'à exercer la fonction d'un élément d'accouplement par saisie et transport de la pièce (1), un chariot de serrage (410), équipé d'au moins une mâchoire de serrage mobile (40, 44), servant d'élément de guidage (4), lequel chariot saisit la pièce (1) ou s'y applique à la manière d'une butée, et une mâchoire de serrage (40) présentant aussi bien un corps de glissement (404) qu'un corps de serrage (403) qui, mobiles l'un par rapport à l'autre, sont réglables par rapport à la pièce (1), et la fonctionnalité d'un élément d'accouplement ou d'un élément de guidage étant obtenue selon le choix du corps (403, 404) réglé par rapport à la pièce (1), **caractérisée en ce que** la mâchoire de serrage (40) supporte en tant que corps de glissement (404) des corps rotatifs (400) de configuration bombée, sous forme de cylindre, de tronc de cône ou de double tronc de cône.

2. Machine-outil à bois selon la revendication 1, **caractérisée en ce que** la pièce (1) repose sur un support (2), en particulier sur un établi avec une surface de glissement ou sur un transporteur à rouleaux (20).

3. Machine-outil à bois selon l'une des revendications 1 et 2, **caractérisée en ce que** la pièce (1) repose dans l'élément d'accouplement ou élément de guidage (3, 4).

4. Machine-outil à bois selon l'une des revendications précédentes, **caractérisée en ce qu'**il est prévu en tant qu'élément d'accouplement (3) un tranchant, une pointe, un poinçon, une plaque en caoutchouc, à mandrin, dentée ou striée, réglable par rapport à la pièce, qui crée un assemblage par force d'adhérence/coopération de forme avec la pièce.

5. Machine-outil à bois selon l'une des revendications précédentes, **caractérisée en ce qu'**un chariot de serrage (410), équipé d'au moins une mâchoire de serrage mobile (40), sert d'élément d'accouplement (3), et l'élément d'accouplement (3) coince la pièce par ses mâchoires de serrage (40, 44).

6. Machine-outil à bois selon l'une des revendications précédentes, **caractérisée par** un positionnement dynamique de l'élément de guidage (4) de telle sorte que l'élément de guidage (4) positionne la pièce (1) le plus près possible de l'outil de travail en fonction de la position de l'outil de travail.

7. Machine-outil à bois selon l'une des revendications précédentes, **caractérisée en ce que** l'élément de guidage (4) coince la pièce (1) sur un groupe d'usinage (5) ou la pièce (1) est guidée à la manière d'une butée par l'élément de guidage (4), la pièce (1) se déplaçant alors par rapport à l'élément de guidage (4).

8. Machine-outil à bois selon l'une des revendications précédentes, **caractérisée en ce que** la machine comporte un rail (6), sur lequel sont déplaçables à la manière d'un chariot l'élément d'accouplement (3) et l'élément de guidage (4), avec une possibilité de commande séparée, et la pièce (1) est transportée le long de ce rail (6) au travers des groupes d'usinage (5).

9. Machine-outil à bois selon l'une des revendications précédentes, **caractérisée en ce qu'**elle comporte un troisième ou autre élément d'accouplement et de guidage (3, 4).

10. Machine-outil à bois selon l'une des revendications précédentes, **caractérisée en ce qu'**un élément de guidage (4, 4') est associé fixement, au moins temporairement, à un outil de travail (5) et deux ou plusieurs pièces (1) sont travaillées simultanément et au moins un élément d'accouplement (3, 30) est prévu pour chaque pièce (1).

11. Machine-outil à bois selon l'une des revendications précédentes, **caractérisée en ce que** la pièce (1) est saisie par l'élément d'accouplement (3) essentiellement dans la zone centrale et que l'élément de guidage (4) agit sur la zone d'extrémité, lequel élément peut également faire office ici d'élément d'accouplement (3).

12. Machine-outil à bois selon l'une des revendications précédentes, **caractérisée en ce que** l'élément d'accouplement (3) saisit la pièce (1) à une courte distance en arrière de l'élément de guidage (4) et la transporte et l'élément d'accouplement (3) reprend éventuellement la pièce pour son transport ultérieur.

13. Machine-outil à bois selon l'une des revendications précédentes, **caractérisée par** une direction de serrage oblique, verticale, horizontale ou angulaire de la mâchoire de serrage (40, 44).

14. Machine-outil à bois selon l'une des revendications précédentes, **caractérisée en ce qu'**un entraînement pour un mouvement relatif de la pièce par rapport au chariot de serrage (410) est prévu sur le chariot de guidage.

15. Machine-outil à bois selon l'une des revendications précédentes, **caractérisée en ce qu'**un ou plusieurs outils de travail sont prévus sur le chariot de serrage (410).

16. Machine-outil à bois selon l'une des revendications précédentes, **caractérisée en ce qu'**un dispositif de renversement ou de pivotement pour la pièce (1) est prévu sur le chariot de serrage (410) ou sur la machine-outil à bois.

17. Machine-outil à bois selon la revendication 16, **caractérisée en ce que** la pièce (1) est travaillée par un groupe d'usinage ou par un outil de travail, soit pendant le pivotement soit dans une position de pivotement.

18. Machine-outil à bois selon l'une des revendications précédentes, **caractérisée en ce qu'**au moins une mâchoire de serrage (40, 44) comporte sur le côté intérieur tourné vers la pièce (1) un corps de glissement mobile ou stationnaire ou une plaque de glissement (41), en particulier en matière plastique.

19. Machine-outil à bois selon l'une des revendications précédentes, **caractérisée en ce que** le corps de serrage (403) mobile ou stationnaire présente en particulier un poinçon de serrage, une plaque à mandrin, striée, cannelée, dentée, à aiguilles, à tranchants ou en caoutchouc, qui permet/permettent un assemblage par force d'adhérence et/ou coopération de forme avec la pièce.

20. Machine-outil à bois selon l'une des revendications précédentes, **caractérisée en ce qu'**au moins une mâchoire de serrage (40) est déplaçable par un moyen de force, en particulier un cylindre pneumatique (43), par rapport à la pièce (1), la coince ou forme une butée.

21. Machine-outil à bois selon l'une des revendications précédentes, **caractérisée en ce qu'**une mâchoire de serrage stationnaire (44) définit une ligne de référence en tant que butée mobile longitudinalement.

22. Machine-outil à bois selon l'une des revendications précédentes, **caractérisée en ce que** sont prévues deux mâchoires de serrage (40, 44) et les deux mâchoires de serrage (40, 44) sont mobiles, en particulier entraînables par une transmission par une commande commune.

23. Machine-outil à bois selon l'une des revendications précédentes, **caractérisée en ce que** sont prévues deux mâchoires de serrage et le plan médian entre les deux mâchoires de serrage est défini par une ligne de référence.

24. Machine-outil à bois selon l'une des revendications précédentes, **caractérisée en ce que** sont prévues deux mâchoires de serrage (40, 44) et les deux mâchoires de serrage (40, 44) sont mobiles et réglables par rapport à la pièce.

25. Machine-outil à bois selon l'une des revendications précédentes, **caractérisée en ce que** la force, empreinte par la mâchoire de serrage (44) sur la pièce (1), est plus élevée lors de la saisie et du transport de la pièce (1) que la force empreinte lorsque l'élément de guidage (4) guide la pièce (1) dans la zone d'un groupe d'usinage (5).

26. Machine-outil à bois selon l'une des revendications précédentes, **caractérisée en ce qu'**un élément de serre-flan (7), en particulier un rouleau de serre-flan (71), ou un bec de guidage est prévu pour la pièce (1) sur l'élément d'accouplement (3) ou l'élément de guidage (4).

27. Machine-outil à bois selon la revendication 26, **caractérisée en ce que** l'élément de serre-flan (7) est déplaçable dans la direction transversale par rapport à l'extension longitudinale ou à la direction de transport de la pièce (1).

28. Machine-outil à bois selon l'une des revendications précédentes, **caractérisée en ce que** l'élément de guidage (4) est guidé sur une glissière ou sur un rail (6) et peut être déplacé par le rail (6) par rapport à la pièce (1), être en particulier abaissé à partir du haut en direction de la pièce (1).

29. Machine-outil à bois selon l'une des revendications précédentes, **caractérisée en ce que** l'élément d'accouplement ou l'élément de guidage recouvre/enserre la pièce à la manière d'un portique et une double glissière est prévue pour le guidage de l'élément d'accouplement/de guidage.

30. Machine-outil à bois selon l'une des revendications 26 et 27, **caractérisée en ce que** l'élément de serre-flan (7) peut être déplacé et réglé par rapport à la pièce (1) indépendamment du déplacement de l'élément d'accouplement ou de guidage (3, 4).

31. Machine-outil à bois selon l'une des revendications précédentes, **caractérisée en ce que** chaque élément d'accouplement (3) ou élément de guidage (4) peut être commandé individuellement par la commande, en particulier une commande NC ou CNC.

32. Machine-outil à bois selon la revendication 31, **caractérisée en ce que** la commande règle en fonction du groupe d'usinage (5) la position de l'élément de guidage (4) sur la pièce (1) et la force de retenue sur la mâchoire de serrage (44) de l'élément de guidage respectif (4).

33. Machine-outil à bois selon l'une des revendications 31 et 32, **caractérisée en ce que** la commande prédéfinit en fonction de la phase d'usinage que la pièce (1) est soit saisie et transportée par deux éléments d'accouplement soit saisie et transportée par un élément d'accouplement, tandis que l'élément de guidage guide la pièce ou sert de butée, ou est saisie uniquement par un élément d'accouplement, tandis que l'autre élément de transport achemine une autre pièce en tant qu'élément d'accouplement.

34. Machine-outil à bois selon l'une des revendications précédentes, **caractérisée en ce que** la pièce (1) déplacée est transférée d'un premier élément d'accouplement sur un second élément d'accouplement.

35. Machine-outil à bois selon l'une des revendications précédentes, **caractérisée en ce que** deux éléments d'accouplement/guidage (3, 4) saisissent la pièce (1), chaque élément de guidage (3, 4) saisissant la pièce (1) dans une zone d'extrémité ou la commande prédéfinissant la zone pour la saisie de la pièce (1).

36. Machine-outil à bois selon l'une des revendications précédentes, **caractérisée en ce qu'**une ou plusieurs glissières pour les chariots de serrage sont prévues parallèlement entre elles, et un ou plusieurs chariot de serrage sont utilisables en tant qu'élément d'accouplement ou de guidage, de façon essentiellement indépendante les uns des autres, sur une ou plusieurs glissières.
